# EUROPEAN PATENT APPLICATION

(11) **EP 4 679 228 A1**
(43) Date of publication of application: **14.01.2026**
(21) Application number: 25724914.4
(22) Date of filing: 13.03.2025
(51) Int. Cl.: G06F 1/16, F16C 11/04

(54) **FOLDABLE ELECTRONIC DEVICE INCLUDING HINGE STRUCTURE**

(30) Priority: 17.05.2024 KR 20240064710; 07.06.2024 KR 20240074292
(71) Applicant: Samsung Electronics Co., Ltd., Suwon-si, Gyeonggi-do 16677 (KR)
(72) Inventor: SONG, Minsuk, Suwon-si, Gyeonggi-do 16677 (KR); KANG, Jeongho, Suwon-si, Gyeonggi-do 16677 (KR); KIM, Namwoo, Suwon-si, Gyeonggi-do 16677 (KR); KIM, Minho, Suwon-si, Gyeonggi-do 16677 (KR); KIM, Jihoon, Suwon-si, Gyeonggi-do 16677 (KR); PARK, Changi, Suwon-si, Gyeonggi-do 16677 (KR); AHN, Jaeuk, Suwon-si, Gyeonggi-do 16677 (KR); YOON, Yeonggyu, Suwon-si, Gyeonggi-do 16677 (KR); JUNG, Soli, Suwon-si, Gyeonggi-do 16677 (KR); CHOI, Junyoung, Suwon-si, Gyeonggi-do 16677 (KR)
(74) Representative: Gulde & Partner
(86) International application number: PCT/KR2025/099772
(87) International publication number: WO 2025/239759

(57) **Abstract**

A foldable electronic device according to various embodiments may include a first housing, a second housing, a hinge assembly configured to rotatably connect the first housing and the second housing, and a flexible display which is disposed at least in the first housing and the second housing. The hinge assembly may include: a first spiral arm which is fastened to the first housing and includes a first rotation protrusion of a spiral shape; a second spiral arm which is fastened to the second housing and includes a second rotation protrusion of a spiral shape; and a slider member which includes a first rotation guide portion corresponding to the first rotation protrusion and a second rotation guide portion corresponding to the second rotation protrusion. While the foldable electronic device is being folded, the first spiral arm may rotate about a first rotation axis and the second spiral arm may rotate about a second rotation axis, and the slider member may move in a first direction which is parallel to the first rotation axis or the second rotation axis.

## Description

### [Technical Field]

The disclosure relates to a foldable electronic device including a hinge structure.

### [Background Art]

Electronic devices are developing to be portable or wearable to enhance mobility and accessibility. Such electronic devices are getting lighter and thinner for portability and are evolving for user convenience.

For example, a foldable electronic device provided with a flexible display may provide a relatively larger screen than an electronic device of a normal bar type, and also may have its size reduced when being folded, so that portability is enhanced, and is on the spotlight as an electronic device for satisfying consumers' tastes.

Such a foldable electronic device may include a flexible display and a plurality of housings, and the plurality of housings and the flexible display may be connected by a hinge assembly, and the housing may be rotated within a designated range according to user's manipulation. Through the process of rotating the plurality of housings, the electronic device may switch from a folded state to an unfolded state or from an unfolded state to a folded state.

The above-described information is provided as a related-art technology for the purpose of assisting in understanding the disclosure. Any assertion or decision is not presented as to what content of the above-described contents is applied as prior art related to the disclosure.

### [Disclosure of Invention]

### [Solution to Problem]

According to an embodiment of the disclosure, a foldable electronic device may include a first housing, a second housing, a hinge assembly configured to rotatably connect the first housing and the second housing, and a flexible display which crosses the hinge assembly and is disposed at least in the first housing and the second housing. The hinge assembly may include: a first spiral arm which is fastened to the first housing and includes a first rotation protrusion of a spiral shape; a second spiral arm which is fastened to the second housing and includes a second rotation protrusion of a spiral shape; and a slider member which includes a first rotation guide portion corresponding to the first rotation protrusion and a second rotation guide portion corresponding to the second rotation protrusion. While the foldable electronic device is being folded, the first spiral arm may rotate about a first rotation axis and the second spiral arm may rotate about a second rotation axis, and the slider member may move in a first direction which is parallel to the first rotation axis or the second rotation axis.

According to an embodiment, a multi-foldable electronic device may include: a first housing; a second housing; a third housing; a first hinge structure configured to rotatably connect the first housing and the second housing; a second hinge structure configured to rotatably connect the second housing and the third housing; and a flexible display which crosses the first hinge structure and the second hinge structure and is disposed in the first housing, the second housing, and the third housing. The first hinge structure may include a plurality of gears disposed on a plurality of axes. The first housing and the second housing may be rotated by the plurality of gears in the first hinge structure. The second hinge structure may include: a first spiral arm fastened to the second housing and including a first rotation guide portion of a spiral shape; a second spiral arm fastened to the third housing and including a second rotation guide portion of a spiral shape; and a slider member including a first rotation guide groove portion corresponding to the first rotation guide portion, and a second rotation guide groove portion corresponding to the second rotation guide portion. While at least one of the second housing or the third housing is rotating, the first spiral arm may rotate about a first rotation axis and the second spiral arm may rotate about a second rotation axis, and the slider member may move in a direction parallel with the first rotation axis and the second rotation axis.

### [Brief Description of Drawings]

FIG. 1 is a side view illustrating an example of a first state of a foldable electronic device including a plurality of hinge structures according to an embodiment.
FIG. 2 is a perspective view illustrating an example of the first state of the foldable electronic device including the plurality of hinge structures according to an embodiment.
FIG. 3 is a side view illustrating an example of a second state of the foldable electronic device including the plurality of hinge structures according to an embodiment.
FIG. 4 is a perspective view illustrating an example of the second state of the foldable electronic device including the plurality of hinge structures according to an embodiment.
FIG. 5 is a side view illustrating an example of a third state of the foldable electronic device including the plurality of hinge structures according to an embodiment.
FIG. 6 is a perspective view illustrating an example of the third state of the foldable electronic device including the plurality of hinge structures according to an embodiment.
FIG. 7 is a view illustrating components of a foldable electronic device according to an embodiment.
FIG. 8 is a view illustrating components of a first hinge structure according to an embodiment.
FIG. 9 is a view illustrating components of a second hinge structure according to an embodiment.
FIG. 10 is an exploded perspective view of the components of the second hinge structure according to an embodiment.
FIG. 11 is a view illustrating components of a first hinge assembly according to an embodiment.
FIG. 12 is an exploded perspective view of the components of the first hinge assembly according to an embodiment.
FIG. 13 is a perspective view of a base member according to an embodiment.
FIG. 14 is a perspective view illustrating a front surface of a first rotation arm according to an embodiment.
FIG. 15 is a perspective view illustrating a rear surface of the first rotation arm according to an embodiment.
FIG. 16 is a perspective view illustrating a rotation axis of arms according to an embodiment.
FIG. 17 is a view illustrating the second hinge structure in an unfolded state of the foldable electronic device according to an embodiment.
FIG. 18 is a view illustrating the second hinge structure in a folded state of the foldable electronic device according to an embodiment.
FIG. 19 is a view illustrating the first hinge assembly in the folded state of the foldable electronic device according to an embodiment.
FIG. 20 is a cross-sectional view of a cross-section A-A' of the first hinge assembly of FIG. 11 according to an embodiment.
FIG. 21 is a cross-sectional view of a cross-section B-B' of the first hinge assembly of FIG. 11 according to an embodiment.
FIG. 22 is a cross-sectional view of a cross-section C-C' of the first hinge assembly of FIG. 19 according to an embodiment.
FIG. 23 is a cross-sectional view of a cross-section D-D' of the first hinge assembly of FIG. 19 according to an embodiment.
FIG. 24 is a front view illustrating a front surface of a first spiral arm according to an embodiment.
FIG. 25 is a rear view illustrating a rear surface of the first spiral arm according to an embodiment.
FIG. 26 is a perspective view of a first cam structure according to an embodiment.
FIG. 27 is a view illustrating arrangements of the first spiral arm and the first cam structure in the unfolded state of the foldable electronic device according to an embodiment.
FIG. 28 is a view illustrating an example of arrangements of the first spiral arm and the first cam structure while the foldable electronic device is being folded according to an embodiment.
FIG. 29 is a view illustrating arrangements of the first spiral arm and the first cam structure in the folded state of the foldable electronic device according to an embodiment;
FIG. 30 is a perspective view of a slider member according to an embodiment.
FIG. 31 is a view illustrating movement of the slider member according to an embodiment.
FIG. 32 is a perspective view illustrating a stopper structure of a hinge housing according to an embodiment.
FIG. 33 is a view illustrating a structure in which a first locking portion of a first rotation arm is caught by a first stopper of the hinge housing according to an embodiment.
FIG. 34 is a view illustrating a first stopper structure including an elastic member according to an embodiment.
FIG. 35 is a view illustrating the first stopper structure including a magnetic substance according to an embodiment.
FIG. 36 is a cross-sectional view of a cross-section E-E' of the first hinge assembly of FIG. 11 according to an embodiment.
FIG. 37 is a view illustrating an example of a cross-sectional shape of a first rail portion of the base member according to an embodiment.
FIG. 38 is a view illustrating an example of the cross-sectional shape of the first rail portion of the base member according to an embodiment.
FIG. 39 is a view illustrating an example of the cross-sectional shape of the first rail portion of the base member according to an embodiment.
FIG. 40 is a view illustrating an example of the cross-sectional shape of the first rail portion of the base member according to an embodiment.
FIG. 41 is a front view illustrating a front surface of a support plate according to an embodiment.
FIG. 42 is a rear view illustrating a rear surface of the support plate according to an embodiment.
FIG. 43 is a view illustrating an extension portion of a first spiral arm inserted into at least one groove portion of the support plate according to an embodiment.
FIG. 44 is a view illustrating an example of a state in which the extension portion of the first spiral arm is inserted into the at least one groove portion of the support plate.
FIG. 45 is a cross-sectional view of a cross-section F-F' of the first hinge assembly of FIG. 44 according to an embodiment.
FIG. 46 is a view illustrating a cross-section G-G' and a cross-section H-H' of the extension portion of the first spiral arm inserted into the at least one groove portion of the support plate according to an embodiment.
FIG. 47 is a view illustrating a cross-section I-I' and a cross-section J-J' of the first hinge assembly in the folded state of the foldable electronic device according to an embodiment.
FIG. 48 is a view illustrating a cross-section K-K' and a cross-section L-L' of the first hinge assembly on one example while the foldable electronic device is being folded according to an embodiment.
FIG. 49 is a view illustrating a cross-section M-M' and a cross-section N-N' of the first hinge assembly in the unfolded state of the foldable electronic device according to an embodiment.
FIG. 50 is a view illustrating a flexible display in the folded state of the foldable electronic device according to an embodiment.
FIG. 51 is a view illustrating a support plate supporting the flexible display according to an embodiment.

Regarding explanation of the drawings, the same or like reference numerals may be used to refer to the same or like components.

### [Mode for the Invention]

Hereinafter, various embodiments of the disclosure will be described with reference to the accompanying drawings. **It** should be appreciated that various embodiments are not intended to limit the disclosure to particular embodiments and include various modifications, equivalents, and/or alternatives of embodiments of the disclosure.

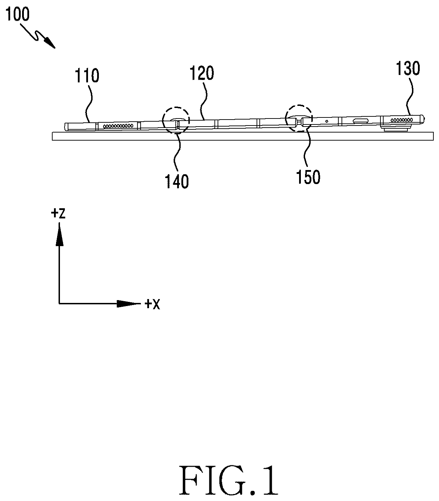

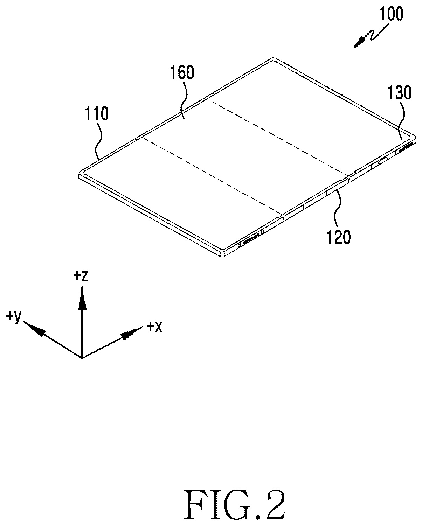

FIG. 1 is a side view illustrating an example of a first state of a foldable electronic device including a plurality of hinge structures according to an embodiment. FIG. 2 is a perspective view illustrating an example of the first state of the foldable electronic device including the plurality of hinge structures according to an embodiment.

According to an embodiment of the disclosure, the foldable electronic device 100 may include a first housing 110, a second housing 120, a third housing 130, a first hinge structure 140, a second hinge structure 150, and a flexible display 160. **The** first hinge structure 140 may be disposed between the first housing 110 and the second housing 120. The first hinge structure 140 may rotatably connect the first housing 110 and the second housing 120.

According to an embodiment, the second hinge structure 150 may be disposed between the second housing 120 and the third housing 130. The second hinge structure 150 may rotatably connect the second housing 120 and the third housing 130. The flexible display 160 may be disposed on at least the first housing 110, the second housing 120, and the third housing 130.

According to an embodiment, the flexible display 160 may be disposed across at least a part of the first hinge structure 140 and the second hinge structure 150. The flexible display 160 may be folded or unfolded by the first hinge structure 140 and the second hinge structure 150.

According to an embodiment of the disclosure, the flexible display 160 may include a first region, a second region, and a third region. For example, the first region may be a region out of the entire regions of the flexible display 160 that is disposed in the first housing 110. For example, the second region may be a region out of the entire regions of the flexible display 160 that is disposed in the second housing 120. For example, the third region may be a region out of the entire regions of the flexible display 160 that is disposed in the third housing 130.

According to an embodiment of the disclosure, referring to FIGS. 1 and 2, the first state of the foldable electronic device 100 may include a state in which the foldable electronic device 100 is unfolded by the first hinge structure 140 and is unfolded by the second hinge structure 150. For example, in the first state in which the foldable electronic device 100 is unfolded by the first hinge structure 140 and the second hinge structure 150, the first housing 110, the second housing 120, and the third housing 130 may be disposed substantially parallel. For example, in the first state in which the foldable electronic device 100 is unfolded, the first region, the second region, and the third region of the flexible display 160 may be disposed substantially parallel. For example, in the first state in which the foldable electronic device 100 is unfolded, the first region, the second region, and the third region of the flexible display 160 may be disposed to face a first direction (for example, the +z axis direction).

According to an embodiment of the disclosure, the foldable electronic device 100 may be unfolded in sequence by the second hinge structure 150 and the first hinge structure. For example, the second housing 120 and the third housing 130 may be rotated by the second hinge structure 150. For example, the first housing 110 and the second housing 120 may be rotated by the first hinge structure 140.

According to an embodiment of the disclosure, as the second housing 120 and the third housing 130 are rotated by the second hinge structure 140, the second region and the third region of the flexible display 160 may be disposed substantially parallel to each other. For example, the second region and the third region may be disposed to face the first direction. For example, as the second housing 120 and the third housing 130 are rotated by the second hinge structure 150, the second region of the flexible display 160 may move away from the third region.

According to an embodiment of the disclosure, as the first housing 110 and the second housing 120 are rotated by the first hinge structure 140, the first region and the second region of the flexible display 160 may be disposed substantially parallel to each other. For example, the first region and the second region may be disposed to face the first direction. For example, as the first housing 110 and the second housing 120 are rotated by the second hinge structure 150, the first region of the flexible display 160 may move away from the second region.

According to an embodiment of the disclosure, referring to FIGS. 1 and 2, in the first state of the foldable electronic device 100, all of the first region, the second region, and the third region of the flexible display 160 may be disposed to face the first direction.

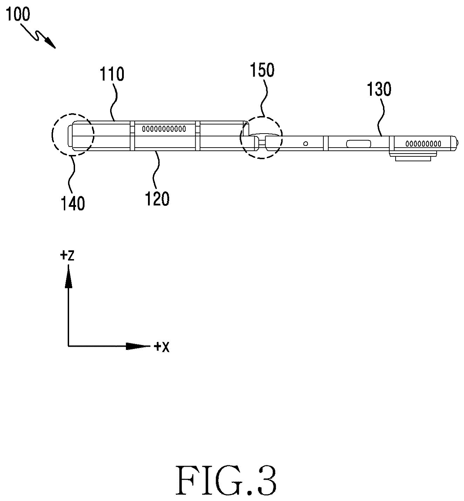

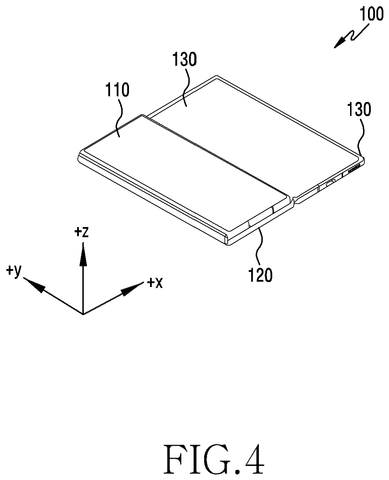

FIG. 3 is a side view illustrating an example of a second sate of the foldable electronic device including the plurality of hinge structures according to an embodiment. FIG. 4 is a perspective view illustrating an example of the second state of the foldable electronic device including the plurality of hinge structures according to an embodiment.

According to an embodiment of the disclosure, referring to FIGS. 3 and 4, the second state of the foldable electronic device 100 may include a state in which the foldable electronic device 100 is folded by the first hinge structure 140 and is unfolded by the second hinge structure 150. The first housing 110 and the second housing 120 may be rotated by the first hinge structure 140. For example, in the state in which the foldable electronic device 100 is folded by the first hinge structure 140, the first housing 110 and the second housing 120 may overlap each other. For example, as the foldable electronic device 100 is folded by the first hinge structure 140, the first region of the flexible display 160 gets close to the second region. For example, in the state in which the foldable electronic device 100 is folded by the first hinge structure 140, the first region and the second region of the flexible display 160 may overlap each other. For example, the state in which the first region and the second region overlap each other may include a state in which the first region and the second region face each other. For example, the state in which the first region and the second region overlap each other may include a state in which the first region is disposed to face a second direction (-z axis direction) and the second region is disposed to face the first direction.

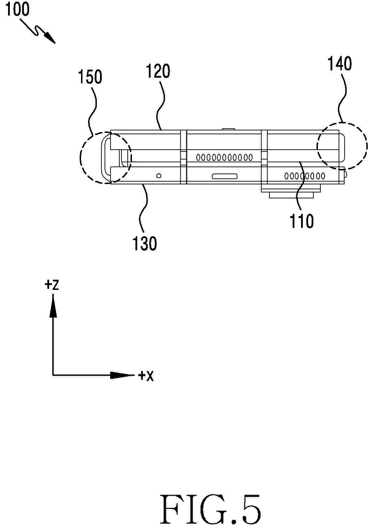

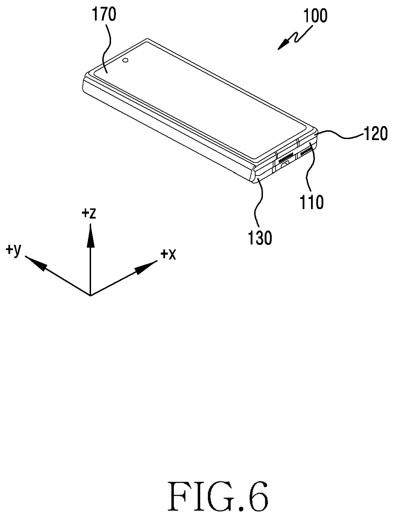

FIG. 5 is a side view illustrating an example of a third state of the foldable electronic device including the plurality of hinge structures according to an embodiment. FIG. 6 is a perspective view illustrating an example of the third state of the foldable electronic device including the plurality of hinge structures according to an embodiment.

According to an embodiment of the disclosure, referring to FIGS. 5 and 6, the third state of the foldable electronic device 100 may include a state in which the foldable electronic device 100 is folded by the first hinge structure 140 in the second state and is folded by the second hinge structure 150. For example, in the third state, the third housing 130 may be disposed to overlap the first housing 110 and the second housing 120. For example, in the third state, the first housing 110, the second housing 120, and the third housing 130 may be disposed to overlap one another. For example, in the third state, the first region and the third region of the flexible display 160 may be disposed to face the first direction and the second region may be disposed to face the second direction.

According to an embodiment of the disclosure, in the third state, the second housing 120 may be disposed between the first housing 110 and the third housing 130. **In** the third state, as the foldable electronic device 100 is folded by the second hinge structure 150, the first housing 110 may be disposed or accommodated in a space formed between the second housing 120 and the third housing 130. A width of the second hinge structure 150 may be wider than a width of the first hinge structure to make form a space to have the first housing 110 disposed or accommodated therein. For example, the width of the second hinge structure 150 may be wider than the width of the first hinge structure 140, such that a radius of rotation of the second housing 120 or the third housing 130 by the second hinge structure 150 may be larger than a radius of rotation of the first housing 110 or the second housing 120 by the first hinge structure 140.

According to an embodiment of the disclosure, the first housing 110 may include a sub display 170. For example, the sub display 170 may be disposed on the opposite side of the side of the first housing 110 on which the flexible display 160 is disposed. **In** the third state of the foldable electronic device 100, the sub display 170 disposed in the first housing 110 may be disposed to face the first direction.

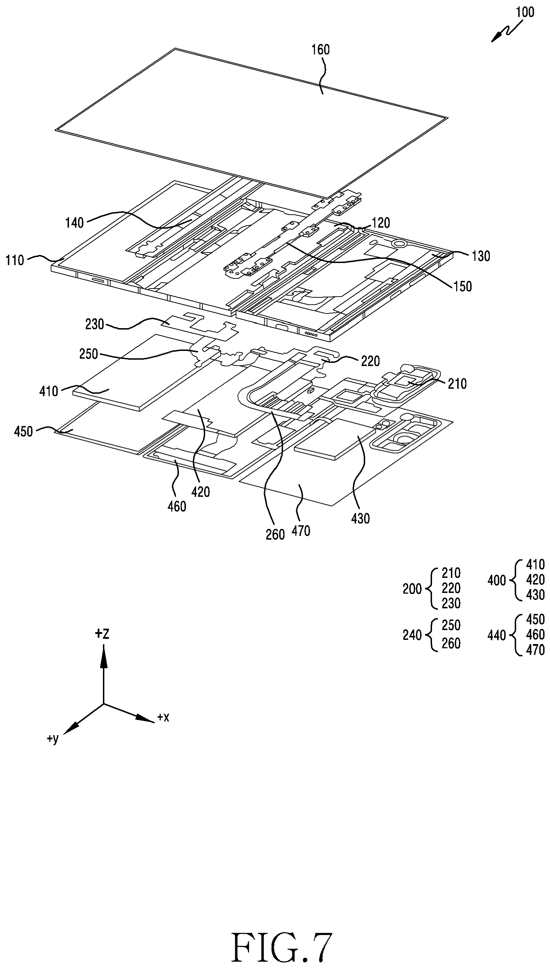

FIG. 7 is a view illustrating components of a foldable electronic device according to an embodiment.

According to an embodiment of the disclosure, the foldable electronic device 100 may include a first housing 110, a second housing 120, a third housing 130, a first hinge structure 140, a second hinge structure 150, a flexible display 160, printed circuit boards 200, flexible printed circuit boards 240, batteries 400, and covers 440.

According to an embodiment of the disclosure, the first hinge structure 140 may be disposed between the first housing 110 and the second housing 120, and the flexible display 160. The first hinge structure 140 may rotatably connect the first housing 110 and the second housing 120. As the first housing 110 or the second housing 120 is rotated by the first hinge structure 140, the first region or the second region of the flexible display 160 may be folded. The first hinge structure 140 may support at least a part of the first region and the second region of the flexible display 160.

According to an embodiment of the present disclosure, the second hinge structure 150 may be disposed between the second housing 120 and the third housing 130, and the flexible display 160. The second hinge structure 150 may rotatably connect the second housing 120 and the third housing 130. As the second housing 120 or the third housing 130 is rotated by the second hinge structure 150, the second region or the third region of the flexible display 160 may be folded. The second hinge structure 150 may support at least a part of the second region and the third region of the flexible display 160.

According to an embodiment of the disclosure, the foldable electronic device 100 may include printed circuit boards 200 (PCBs) and flexible printed circuit boards 240 (FPCBs). The printed circuit boards 200 and the flexible printed circuit boards 240 may electrically connect a plurality of electronic components disposed in the foldable electronic device 100.

According to an embodiment of the disclosure, the printed circuit boards 200 may include a first printed circuit board 210, a second printed circuit board 220, and a third printed circuit board 230. The first printed circuit board 210 may be disposed on the other side of the first housing 110 that is opposite to one side of the first housing 110 in which the first region of the flexible display 160 is disposed. The second printed circuit board 220 may be disposed on the other side of the second housing 120 that is opposite to one side of the second housing 120 in which the second region of the flexible display 160 is disposed. The third printed circuit board 230 may be disposed on the other side of the third housing 130 that is opposite to one side of the third housing 130 in which the third region of the flexible display 160 is disposed.

According to an embodiment of the disclosure, the flexible printed circuit boards 240 may include a first flexible printed circuit board 250 and a second flexible printed circuit board 260. For example, the first flexible printed circuit board 250 may electrically connect the first printed circuit board 210 disposed on the other side of the first housing 110 and the second printed circuit board 220 disposed on the other side of the second housing 120. The first flexible printed circuit board 250 may be formed of a material that is bendable by the first hinge structure 140. For example, the second flexible printed circuit board 260 may electrically connect the second printed circuit board 220 disposed on the other side of the second housing 120 and the third printed circuit board 230 disposed on the other side of the third housing 130. The second flexible printed circuit board 260 may be formed of a material that is bendable by the second hinge structure 150.

According to an embodiment of the disclosure, the foldable electronic device 100 may include the covers 440. The covers 440 may form the exterior of the foldable electronic device 100 and may protect the plurality of electronic components disposed inside the foldable electronic device 100. The covers 440 may include a first cover 450, a second cover 460, and a third cover 470. The first cover 450 may be disposed to protect the first housing 110 and electronic components disposed on the other side of the first housing 110. The second cover 460 may be disposed to protect the second housing 120 and electronic components disposed on the other side of the second housing 120. The third cover 470 may be disposed to protect the third housing 130 and electronic components disposed on the other side of the third housing 130.

According to an embodiment of the disclosure, the foldable electronic device 100 may include the batteries 400 capable of supplying power to the foldable electronic device 100. The batteries 400 may include a first battery 410, a second battery 420, and a third battery 430. For example, the first battery 410 may be disposed between the first printed circuit board 210 and the first cover 450. For example, the second battery 420 may be disposed between the second printed circuit board 220 and the second cover 460. For example, the third battery 430 may be disposed between the third printed circuit board 230 and the third cover 470.

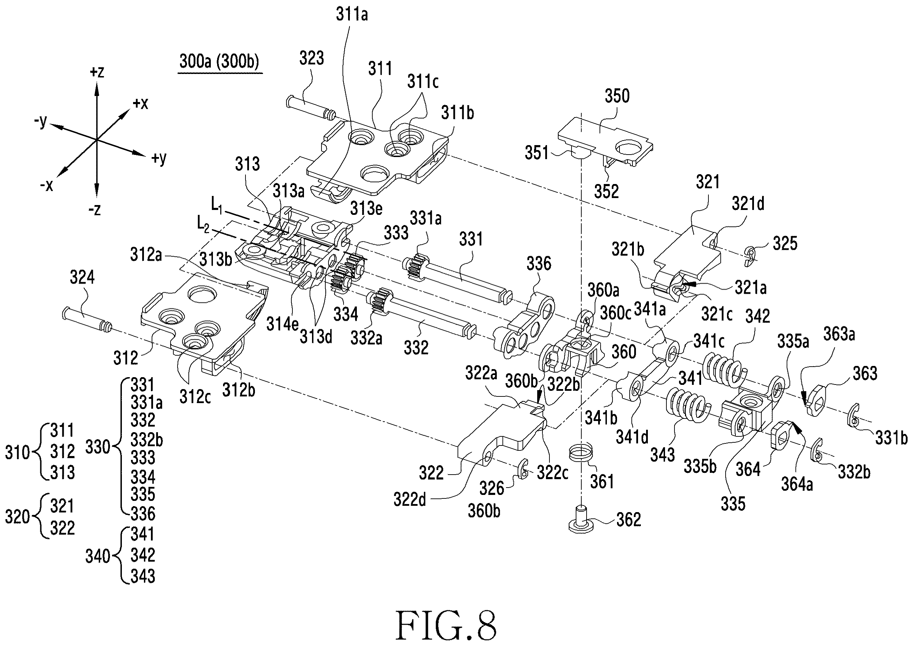

FIG. 8 is a view illustrating components of a first hinge structure, according to an embodiment.

Referring to FIG. 8, a hinge structure 300a or 300b according to an embodiment may include a bracket structure 310, an arm structure 320, a rotation structure 330, a detent structure 340, a support portion 350, a stopper 360, an elastic member 361, and/or a screw 362. The hinge structure 300a or 300b of FIG. 8 may correspond to the first hinge structure 140.

According to an embodiment, the bracket structure 310 may include a first bracket 311, a second bracket 312, and a fixing bracket 313.

In one example, the fixing bracket 313 may be disposed in a hinge housing to support the first bracket 311 and the second bracket 312. A first groove 313a and a second groove 313b may be formed on a top surface (e.g., a surface in the +z direction in FIG. 8) of the fixing bracket 313, and the first bracket 311 and the second bracket 312 may be coupled to the fixing bracket 313 via the first groove 313a and the second groove 313b. The first groove 313a and the second groove 313b may be formed in an arc shape with a constant curvature by way of an example, and the first bracket 311 may be coupled to the first groove 313a and the second bracket 312 may be coupled to the second groove 313b. According to an embodiment, the first groove 313a and the second groove 313b may be formed in an arc shape having the same curvature, but according to an embodiment, the first groove 313a and the second groove 313b may be formed in an arc shape having different curvatures. The first groove 313a may be formed in a certain region (e.g., a region in the +x direction in FIG. 8) of the fixing bracket 313 that is adjacent to the first bracket 311, and the second groove 313b may be formed in another region (e.g., a region in the -x direction in FIG. 8) of the fixing bracket 313 that is adjacent to the second bracket 312. A plurality of gear holes 313d and a plurality of shaft holes 313e may be formed on a certain side surface (e.g., a surface in the +y direction in FIG. 8) of the fixing bracket 313. Through the gear holes 313d and the shaft holes 313e, a first idle gear 333 and a second idle gear 334, and a first shaft 331 and a second shaft 332 may be engaged with the certain side surface of the fixing bracket 313.

In one example, the first bracket 311 may include a first rail portion 311a, a first slide hole 311b, and a plurality of coupling holes 311c. The first rail portion 311a may be formed by protruding from a certain region of the first bracket 311. The first rail portion 311a may be formed in a shape corresponding to the first groove 313a of the fixing bracket 313, and the first bracket 311 may be coupled to the first groove 313a of the fixing bracket 313 through the first rail portion 311a. The first slide hole 311b may be formed in a certain region of the first bracket 311 that is adjacent to a first arm portion 321, and the first bracket 311 and the first arm portion 321 may be connected through a first fixing portion 323 penetrating through the first slide hole 311b and the first arm portion 321. The first fixing portion 323 may slide in the first slide hole 311b as the foldable electronic device 100 pivots from a folded state to an unfolded state or pivots from an unfolded state to a folded state. The plurality of coupling holes 311c may be formed on a certain surface (e.g., a surface in the +z direction in FIG. 8) of the first bracket 311 that faces the first housing 110, and the first bracket 311 may be coupled to a certain region of the first housing 110 through the plurality of coupling holes 311c. The first bracket 311 coupled with the first housing 110 may slide along the first groove 313a of the fixing bracket 313 according to a rotational motion of the first housing 110, and may rotate about an imaginary first pivot axis L1.

In one example, the second bracket 312 may include a second rail portion 312a, a second slide hole 312b, and a plurality of coupling holes 312c. The second rail portion 312a may be formed by protruding from a certain region of the second bracket 312. The second rail portion 312a may be formed in a shape corresponding to the second groove 313b of the fixing bracket 313, and the second bracket 312 may be coupled to the second groove 313b of the fixing bracket 313 through the second rail portion 312a. The second slide hole 312b may be formed in a certain region of the second bracket 312 that is adjacent to a second arm portion 322, and the second bracket 312 and the second arm portion 322 may be connected through a second fixing portion 324 penetrating through the second slide hole 312b and the second arm portion 322. The second fixing portion 324 may slide in the second slide hole 312b as the foldable electronic device 100 pivots from a folded state to an unfolded state, or pivots from an unfolded state to a folded state. The plurality of coupling holes 312c may be formed on a certain surface (e.g., a surface in the +z direction in FIG. 8) of the second bracket 312 that faces the second housing 120, and the second bracket 312 may be coupled to a certain region of the second housing 120 through the plurality of coupling holes 312c. The second bracket 312 coupled to the second housing 120 may slide along the second groove 313b of the fixing bracket 313 according to a rotational motion of the second housing 120, and may rotate about an imaginary second pivot axis L2. In this case, the imaginary first pivot axis L1 and the imaginary second pivot axis L2 may be parallel to each other, and may be formed on a plane parallel to the flexible display 160 when the foldable electronic device 100 is in a folded state.

According to an embodiment, the arm structure 320 may include the first arm portion 321 and the second arm portion 322.

In one example, the first arm portion 321 may include a first cam portion 321a, a first support rib 321b, a first insertion hole 321c, and a first through hole 321d. The first insertion hole 321c may be formed in a certain region (e.g., -z direction in FIG. 8) of a lower end of the first arm portion 321, and the first shaft 331, which will be described below, may be inserted into the first insertion hole 321c to be connected with the first arm portion 321. As the first arm portion 321 and the first shaft 331 are connected, the first arm portion 321 may rotate about a pivot axis of the first shaft 331. The first cam portion 321a may be formed in a region adjacent to the first insertion hole 321c, and may be formed by protruding toward a detent plate 341 (e.g., the +y direction in FIG. 8). The first cam portion 321a may be formed in a concavo-convex shape with a plurality of peaks and valleys, and the first cam portion 321a may be disposed to engage with a detent portion 341a formed on the detent plate 341, thereby providing a sense of detent to the first arm portion 321. Further, the first cam portion 321a may be disposed to engage with the detent portion 341a formed on the detent plate 341, thereby allowing the first arm portion 321 to be fixed at a designated rotation angle and/or within a designated rotation angle range, and as a result, fixing the movement of the foldable electronic device 100 at the designated rotation angle and/or the designated rotation angle range (for example, a range of from 30° to 150°). The first support rib 321b may be formed by protruding from a certain region of the first arm portion 321, and may move the support portion 350 toward the top end (e.g., the +z direction in FIG. 8) when the foldable electronic device 100 pivots from a folded state to an unfolded state. The first through hole 321d may be formed in a certain region (e.g., a region in the +x direction in FIG. 8) opposite to the region in which the first insertion hole 321c of the first arm portion 321 is formed. The first fixing portion 323 penetrating through the first slide hole 311b may penetrate through the first through hole 321d, thereby connecting the first bracket 311 and the first arm portion 321. According to an embodiment, a first washer ring 325 may be engaged with one end of the first fixing portion 323 penetrating through the first through hole 321d, thereby fixing the first fixing portion 323 to the first arm portion 321. Although not shown in the drawing, according to an embodiment, the first washer ring 325 may be engaged with the other end of the first fixing portion 323, thereby fixing the first fixing portion 323 to the first bracket 311. Furthermore, according to an embodiment, a protrusion may be formed on a certain region of the first bracket 311 (or the first arm portion 321) and a coupling groove corresponding to the protrusion may be formed on a certain region of the first arm portion 321 (or the first bracket 311), such that the first bracket 311 and the first arm portion 321 may be connected via the protrusion and the coupling groove described above. The first arm portion 321 connected with the first bracket 311 may rotate about a pivot axis different from that of the first bracket 311 while sliding with reference to the first bracket 311 in the process in which the foldable electronic device 100 pivots from a folded state to an unfolded state, or pivots from an unfolded state to a folded state.

In one example, the second arm portion 322 may include a second cam portion 322a, a second support rib 322b, a second insertion hole 322c, and a second through hole 322d. The second insertion hole 322c may be formed in a certain region of a lower end (e.g., -z direction in FIG. 8) of the second arm portion 322, and the second shaft 332 may be inserted into the second insertion hole 322c, such that the second arm portion 322 and the second shaft 332 are connected. As the second arm portion 322 and the second shaft 332 are connected, the second arm portion 322 may rotate about a pivot axis of the second shaft 332. The second cam portion 322a may be formed in a region adjacent to the second insertion hole 322c, and may be formed by protruding toward the detent plate 341 (e.g., the +y direction in FIG. 8). The second cam portion 322a may be formed in a concavo-convex shape with a plurality of peaks and valleys similar to the first cam portion 321a, and the second cam portion 322a may be disposed to engage with the detent portion 341b formed on the detent plate 341 to provide a sense of detent to the second arm portion 322. Further, the second cam portion 322a may be disposed to engage with the detent portion 341b formed on the detent plate 341, thereby allowing the second arm portion 322 to be fixed at a designated rotation angle and/or within a designated rotation angle range (e.g., a rotation angle range of from 30° to 150°) and, as a result, fixing the movement (or posture) of the foldable electronic device 100 at the designated rotation angle and/or within the designated rotation angle range. The second support rib 322b may be formed by protruding from a certain region of the second arm portion 322, and may move the support portion 350 upwards (e.g., the +z direction in FIG. 8) when the foldable electronic device 100 pivots from a folded state to an unfolded state. The second through hole 322d may be formed on an opposite region of the second insertion hole 322c. The second fixing portion 324 penetrating through the second slide hole 312b may penetrate through the second through hole 322d, thereby connecting the second bracket 312 and the second arm portion 322. A second washer ring 326 may be engaged with one end of the second fixing portion 324 penetrating through the second through hole 322d, thereby fixing the second fixing portion 324 to the second arm portion 322. Although not illustrated in the drawing, according to an embodiment, the second washer ring 326 may be engaged with the other end of the second fixing portion 324, thereby fixing the second fixing portion 324 to the second bracket 312. Further, according to an embodiment, a protrusion may be formed on a certain region of the second bracket 312 (or the second arm portion 322), and a coupling groove corresponding to the protrusion may be formed on a certain region of the second arm portion 322 (or the second bracket 312), such that the second bracket 312 and the second arm portion 322 may be connected through the protrusion and the coupling groove described above. The second arm portion 322 connected with the second bracket 312 may rotate about a pivot axis different from that of the second bracket 312 in the process in which the foldable electronic device 100 pivots from a folded state to an unfolded state, or pivots from an unfolded state to a folded state.

According to an embodiment, the rotation structure 330 may include the first shaft 331 coupled with a first gear 331a, the second shaft 332 coupled with a second gear 332a, the first idle gear 333, the second idle gear 334, a shaft bracket 335, and a gear cover 336.

In one example, one end of the first shaft 331 may be engaged with the shaft hole 313e of the fixing bracket 313, and the other end of the first shaft 331 may penetrate through a first shaft insertion hole 335a of the shaft bracket 335. The first arm portion 321 may be connected to a certain region of the first shaft 331, and the first arm portion 321 may rotate about the first shaft 331 as a pivot axis.

In one example, the second shaft 332 may be disposed adjacent to the first shaft 331, and one end of the second shaft 332 may be engaged with the shaft hole 313e of the fixing bracket 313, and the other end of the second shaft 332 may penetrate through a second shaft insertion hole 335b of the shaft bracket 335. The second arm portion 322 may be connected to a certain region of the second shaft 332, and the second arm portion 332 may rotate about the second shaft 332 as a pivot axis.

In one example, the first idle gear 333 and the second idle gear 334 may be disposed between the first gear 331a coupled to the first shaft 331 and the second gear 332a coupled to the second shaft 332. The first idle gear 333 and the second idle gear 334 may be engaged with the plurality of gear holes 313d of the fixing bracket 313, respectively, and the first idle gear 333 and the second idle gear 334 may rotate in engagement with each other, thereby allowing the first arm portion 321 and the second arm portion 322 to rotate with the same rotation angle. According to an embodiment, the first idle gear 333 may rotate in engagement with the first gear 331a and the second idle gear 334, and the second idle gear 334 may rotate in engagement with the first idle gear 333 and the second gear 332a. As the first gear 331a, the second gear 332a, the first idle gear 333, and the second idle gear 334 rotate in engagement with one another with the same angle, the first shaft 331 and the second shaft 332 may rotate in opposite directions by the same rotation angle. In one example, when the first shaft 331 rotates in the counterclockwise direction (e.g., the +z direction from the +x axis in FIG. 8) by 30°, the second shaft 332 may rotate in the clockwise direction (e.g., the +z direction from the -x axis in FIG. 5) by 30°. As the first shaft 331 and the second shaft 332 rotate by the same rotation angle, the first arm portion 321 and the second arm portion 322 connected to the first shaft 331 and the second shaft 332 may rotate by the same rotation angle.

In one example, the shaft bracket 335 may include the first shaft insertion hole 335a into which the first shaft 331 is inserted and the second shaft hole 335b into which the second shaft 332 is inserted. The shaft bracket 335 may be disposed in the hinge housing to support the first shaft 331 and the second shaft 332 which are inserted into the shaft bracket 335 through the first shaft insertion hole 335a and the second shaft hole 335b.

In one example, the gear cover 336 may be inserted into the first shaft 331 and the second shaft 332 to protect the first gear 331a, the second gear 332a, the first idle gear 333, and the second idle gear 334. The gear cover 336 may prevent the first gear 331a, the second gear 332a, the first idle gear 333, and the second idle gear 334 from being damaged by external forces, and may prevent foreign substances from entering the first gear 331a, the second gear 332a, the first idle gear 333, and the second idle gear 334.

According to an embodiment, the detent structure 340 may include the detent plate 341, a first spring 342, and a second spring 343.

In one example, a third shaft insertion hole 341c may be formed on a certain region of the detent plate 341 to allow the first shaft 331 to be inserted thereinto, and a fourth shaft insertion hole 341d may be formed in another region of the detent plate 341 to allow the second shaft 332 to be inserted thereinto. The detent plate 341 may be connected to the first shaft 331 and the second shaft 332 through the third shaft insertion hole 341c and the fourth shaft insertion hole 341d. The detent plate 341 may include a first detent portion 341a protruding toward the first cam portion 321a of the first arm portion 321, and a second detent portion 341b protruding toward the second cam portion 322a of the second arm portion 322. The first detent portion 341a and the second detent portion 341b may be formed as a concavo-convex structure with at least one peak and at least one valley repeatedly appearing. **The** first detent portion 341a may be disposed to engage with the first cam portion 321a to provide a sense of detent to the first arm portion 321 when the foldable electronic device 100 is in a folded state or unfolded state, and to fix the movement of the first arm portion 321 at a designated rotation angle. Similarly, the second detent portion 341b may be disposed to engage with the second cam portion 322a to provide a sense of detent to the second arm portion 322 when the foldable electronic device 100 is in a folded or unfolded state, and to fix the movement of the second arm portion 322 at a designated rotation angle.

According to an embodiment, a pitch between peaks or valleys of the first detent portion 341a may be formed to be larger than a pitch between peaks or valleys of the first cam portion 321a, so that the first arm portion 321 may rotate within a designated pivot range even when the first detent portion 341a and the first cam portion 321a are engaged with each other. However, the shape of the first detent portion 341a is not limited to the above-described embodiment, and according to an embodiment, the pitch between the peaks or the valleys of the first detent portion 341a may be formed to be the same as the pitch between the peaks or the valleys of the first cam portion 321a, or the pitch between the peaks or the valleys of the first cam portion 321a may be formed to be larger than the pitch between the peaks or the valleys of the first detent portion 341a.

Similarly, a pitch between peaks or valleys of the second detent portion 341b may be formed to be larger than a pitch between peaks or valleys of the second cam portion 322a, so that the second arm portion 321 may rotate within a designated pivot range even when the second detent portion 341b and the second cam portion 322a are engaged with each other. However, the shape of the second detent portion 341a is not limited to the above-described embodiment, and according to an embodiment, the pitch between the peaks or the valleys of the second detent portion 341b may be formed to be the same as the pitch between the peaks or the valleys of the second cam portion 322a, or the pitch between the peaks or the valleys of the second cam portion 322a may be formed to be larger than the pitch between the peaks or the valleys of the second detent portion 341b.

According to an embodiment, the first spring 342 may be disposed to enclose a certain region of the first shaft 331, and the second spring 343 may be disposed to enclose a certain region of the second shaft 332. The first spring 342 and the second spring 343 may be disposed in a compressed state between the detent plate 341 and the shaft bracket 335 to bring the detent plate 341 close to the first arm portion 321 and the second arm portion 322. As the detent plate 341 is brought close to the first arm portion 321 and second arm portion 322, so that engagement of the first detent portion 341a with the first cam portion 321a and engagement of the second detent portion 341b with the second cam portion 322a may be maintained.

According to an embodiment, when a peak of the first detent portion 341a and a peak of the first cam portion 321a or a peak the second detent portion 341b and a peak of the second cam portion 322a come into contact with each other by rotation of the first arm portion 321 and the second arm portion 322, the detent plate 341 may move in one direction (for example, the +y direction in FIG. 8) of the first shaft 331, the second shaft 332, such that the first cam portion 321a and the first detent portion 341a and/or the second cam portion 322a and the second detent portion 341b may be temporarily spaced apart from each other. As the detent plate 341 moves in one direction, the first spring 342 and the second spring 343 may be compressed. When the first arm portion 321 and the second arm portion 322 further rotate by a predetermined angle, the detent plate 341 may be moved back toward the first cam portion 321a and/or the second cam portion 322a by the elastic restoring forces of the first spring 342 and the second spring 343. As a result, the first cam portion 321a and the first detent portion 341a, the second cam portion 322a and the second detent portion 341b may again be disposed in an engaged state, such that the engagement of the first cam portion 321a and the first detent portion 341a, the second cam portion 322a and the second detent portion 341b may be maintained.

According to an embodiment, a flat straight region may be formed on at least a certain region (e.g., a top region) of the peak of the first cam portion 321a, the peak of the second cam portion 322a, the peak of the first detent portion 341a, and/or the peak of the second detent portion 341b. Similarly, a flat straight region may be formed on at least a certain region of the valley of the first cam portion 321a, the valley of the second cam portion 322a, the valley of the first detent portion 341a, and/or the valley of the second detent portion 341b. The straight region formed on a certain region of the peak and the straight region formed on a certain region of the valley may be substantially the same or similarly formed. As the straight regions are formed on the peak and the valley of the first cam portion 321a, the second cam portion 322a, the first detent portion 341a, and the second detent portion 341b, the movement of the first arm portion 321 and/or the second arm portion 322 at a designated rotation angle (for example, 30° or 60°) and/or within a designated rotation angle range (for example, a rotation angle range of 30° to 150°) may be fixed. As the movement of the first arm portion 321 and/or the second arm portion 322 at the designated rotation angle is fixed, the movement of the first housing 110, the second housing 120 of the electronic device at the designated rotation angle may be fixed.

According to an embodiment, the support portion 350 may be disposed in an empty space between the first arm portion 321 and the second arm portion 322, the first shaft 331 and the second shaft 332. The support portion 350 may support a certain region of the flexible display 160 that is not supported by the first arm portion 321 and/or the second arm portion 322 when the foldable electronic device 100 is in an unfolded state. The support portion 350 described above may be moved upwardly (for example, the +z direction in FIG. 8) by the first support rib 321b formed on a certain region of the first arm portion 321, and the second support rib 322b formed on a certain region of the second arm portion 322. In one example, in the process in which the foldable electronic device 100 pivots from a folded state to an unfolded state, the first support rib 321b and the second support rib 322b may come into contact with a certain region of the support portion 350, and as the first arm portion 321 and the second arm portion 322 rotate, the support portion 350 may be moved upwardly (for example, from the -z direction to the +z direction in FIG. 8) by the first support rib 321b and the second support rib 322b.

According to an embodiment, the stopper 360 may be positioned at a lower end (for example, in the -z direction in Figure 8) of the support portion 350. A fifth shaft insertion hole 360a may be formed on a certain region of the stopper 360, and a sixth shaft insertion hole 360b may be formed on a certain region opposite to the fifth shaft insertion hole 360a. The first shaft 331 and the second shaft 332 may be inserted through the fifth shaft insertion hole 360a and the sixth shaft insertion hole 360b, and the first shaft 331, the second shaft 332, and the stopper 360 may be connected via the above-described structure. A through hole 360c may be formed on a certain region of the upper end (for example, +z direction in FIG. 8) of the stopper 360, and a protruding region 351 of the support portion 350 may be inserted toward the lower end of the stopper 360 through the through hole 360c.

The screw 362 according to an embodiment may be coupled with the protruding region 351 inserted into the lower end of the stopper 360, and an elastic member 361 may be disposed between the screw 362 and the stopper 360. The elastic member 361 may be a spring, for example, but is not limited thereto. The elastic member 361 may contact a certain region of the stopper 360, and the elastic member 361 may be compressed as the support portion 350 moves upwardly in the process in which the foldable electronic device 100 pivots from a folded state to an unfolded state. Conversely, in the process in which the foldable electronic device 100 pivots from an unfolded state to a folded state, the support portion 350 may be moved downwardly (for example, the -z direction in FIG. 8) by the elastic restoring force of the elastic member 361.

The hinge structure 300a or 300b according to an embodiment may further include a first auxiliary member 363, a second auxiliary member 364. The first auxiliary member 363 may be engaged with one end of the first shaft 331 adjacent to the shaft bracket 335, and the second auxiliary member 364 may be engaged with one end of the second shaft 332 adjacent to the shaft bracket 335. According to an embodiment, a third washer ring 331b may be engaged with one end of the first shaft 331, such that the first shaft 331 may be fixed to the first auxiliary member 363. Similarly, a fourth washer ring 332b may be engaged with one end of the second shaft 332, such that the second shaft 332 may be fixed to the second auxiliary member 364. According to an embodiment, a screw nut may be engaged with one end of the first shaft 331 to fix the first shaft 331 to the first auxiliary member 363, or a screw nut may be engaged with one end of the second shaft 332 to fix the second shaft 332 to the second auxiliary member 364.

The first auxiliary member 363 may include a third support rib 363a, and the third support rib 363a may be formed by protruding from a certain region of the first auxiliary member 363. Similarly, the second auxiliary member 364 may include a fourth support rib 364a, and the fourth support rib 364a may be formed by protruding from a certain region of the second auxiliary member 364. The first auxiliary member 363 may rotate at the same rotation angle as the first arm portion 321 through the first shaft 331, and the second auxiliary member 364 may rotate at the same rotational angle as the second arm portion 322 through the second shaft 332. The third support rib 363a and the fourth support rib 364a may move the support portion 350 upwardly along with the first support rib 321b of the first arm portion 321 and the second support rib 322b of the second arm portion 322 when the electronic device pivots from a folded state to an unfolded state.

According to an embodiment, the components of the second hinge structure 150 may be different from the components of the first hinge structure 140 of FIG. 8. However, this should not be considered as limiting, and the components of the first hinge structure 140 and the components of the second hinge structure 150 may be the same. For example, the second hinge structure 150 may be implemented by the components of the hinge structures 300a or 300b corresponding to the first hinge structure 140 described above in FIG. 8. Alternatively, the first hinge structure 140 described above may be implemented by the components of the second hinge structure 150.

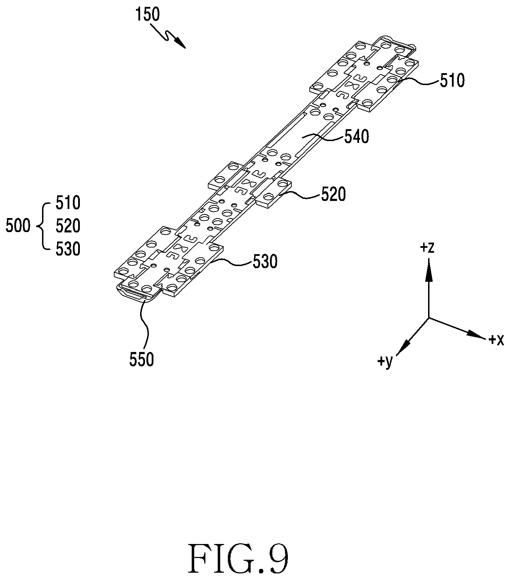

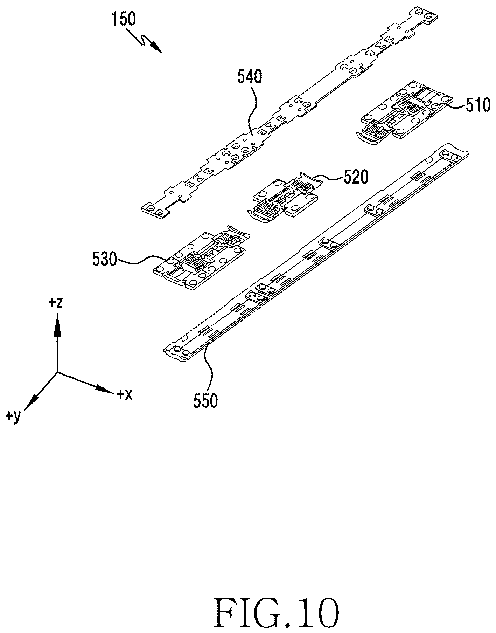

FIG. 9 is a view illustrating components of the second hinge structure, according to an embodiment. FIG. 10 is an exploded perspective view of components of the second hinge structure according to an embodiment.

Referring to FIGS. 9 and 10, the second hinge structure 150 may be implemented by components different from those of the first hinge structure 140.

According to an embodiment of the present disclosure, the second hinge structure 150 may include hinge assemblies 500, a support plate 540, and a hinge housing 550. The hinge assemblies 500 may be at least partially covered by the hinge housing 550. The hinge assemblies 500 may be fastened to the hinge housing 550. For example, the hinge assemblies 500 may be fastened to the hinge housing 550 through at least one fastening mechanism. The hinge housing 550 may support the hinge assemblies 500. The hinge housing 550 may protect the hinge assemblies 500 from external impact of the foldable electronic device 100. The hinge housing 550 may be disposed between the second housing 120 and the third housing 130.

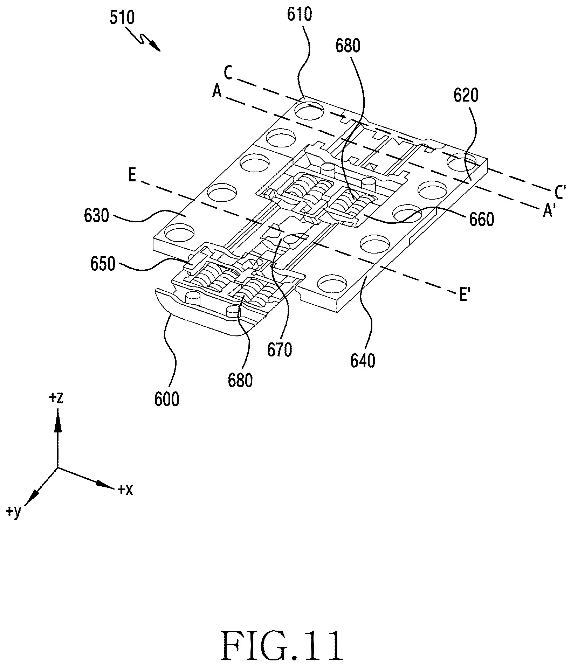

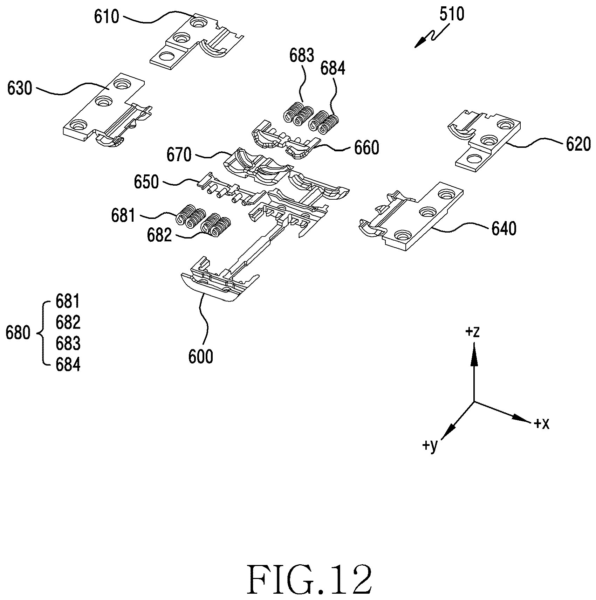

According to an embodiment of the disclosure, the hinge assemblies 500 may include a first hinge assembly 510, a second hinge assembly 520, and a third hinge assembly 530. Each of the hinge assemblies 500 may include a plurality of members which will be described below in FIGS. 11 and 12. The first hinge assembly 510, the second hinge assembly 520, and the third hinge assembly 530 may be disposed in the hinge housing 550. For example, the first hinge assembly 510 and the third hinge assembly 530 may be symmetrically disposed in the hinge housing 550. For example, the second hinge assembly 520 may be disposed between the first hinge assembly 510 and the third hinge assembly 530.

According to an embodiment of the disclosure, the first hinge assembly 510, the second hinge assembly 520, and the third hinge assembly 530 may be the same hinge assembly, or may be different hinge assemblies. For example, the first hinge assembly 510 and the third hinge assembly 530 may be the same hinge assembly. For example, the second hinge assembly 520 may be a hinge assembly that omits rotation arms (e.g., a first rotation arm 610, a second rotation arm 620 of FIG. 11), which will be described below, from the first hinge assembly 510.

According to an embodiment of the disclosure, the arrangement relationship of the hinge assemblies 500 may be changed within the range to achieve the objects of the foldable electronic device 100. The hinge assemblies 500 may be appropriately deformed within the range to implement folding or unfolding of the foldable electronic device 100 by omitting some of the members constituting each of the hinge assemblies 500 or adding other members.

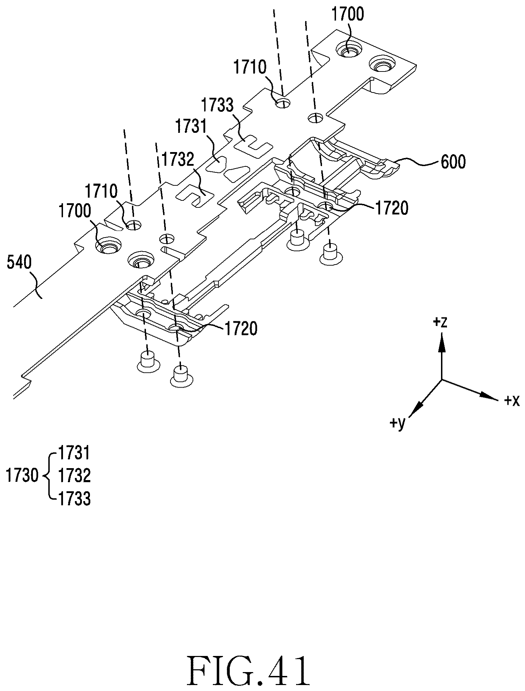

According to an embodiment of the disclosure, the second hinge structure 150 may include the support plate 540 to support the flexible display 160. The support plate 540 may be disposed between the flexible display 160 and the hinge assemblies 500. The hinge assemblies 500 may be connected with the support plate. For example, at least a part of the support plate 540 may be fastened to the hinge assemblies 500, and another part may be fastened to the hinge housing 550. The structure of the support plate 540 will be described below in FIGS. 41 to 42.

FIG. 11 is a view illustrating components of the first hinge assembly according to an embodiment. FIG. 12 is an exploded perspective view of components of the first hinge assembly according to an embodiment.

According to an embodiment of the disclosure, the descriptions of FIGS. 11 to 12 may be equally applied to the second hinge assembly 520 or the third hinge assembly 530.

According to an embodiment of the disclosure, the first hinge assembly 510 may include a first rotation arm 610, a second rotation arm 620, a first spiral arm 630, a second spiral arm 640, a first cam structure 650, a second cam structure 660, a slider member 670, elastic members 680, and a base member 600. The elastic members 680 may include a first elastic member 681, a second elastic member 682, a third elastic member 683, and a fourth elastic member 684.

According to an embodiment of the disclosure, the second housing 120 may rotate in connection with the first rotation arm 610. For example, the first rotation arm 610 may be fastened to the second housing 120 through a fastening mechanism. For example, as the first rotation arm 610 rotates, the second housing 120 may rotate.

According to an embodiment of the disclosure, the first rotation arm 610 may be disposed on the base member 600 to rotate. For example, at least a part of the first rotation arm 610 may rotate in contact with at least a part of the base member 600. For example, at least a part of the first rotation arm 610 may rotate while overlapping the base member 600. The first rotation arm 610 may rotate with at least a part of the first rotation arm 610 overlapping or in contact with the base member 600, so that the first rotation arm 610 may not disengage from the first hinge assembly 510 in the process of rotating. For example, the base member 600 may guide the rotation of the first rotation arm 610. As the base member 600 guides the rotation of the first rotation arm 610, the first rotation arm 610 may rotate about a rotation axis.

According to an embodiment of the disclosure, the first rotation arm 610 may be connected with the first spiral arm 630. For example, the first rotation arm 610 may be fastened to the first spiral arm 630 through a fastening mechanism. For example, as the first rotation arm 610 rotates, the first rotation arm 610 and the first spiral arm 630 may rotate together.

According to an embodiment of the disclosure, the third housing 130 may be connected with the second rotation arm 620. For example, the second rotation arm 620 may be fastened to the third housing 130 through a fastening mechanism. For example, as the second rotation arm 620 rotates, the second rotation arm 620 may rotate with the third housing 130.

According to an embodiment of the disclosure, the second rotation arm 620 may be disposed on the base member 600 to rotate. For example, at least a part of the second rotation arm 620 may rotate in contact with the base member 600. For example, at least a part of the second rotation arm 620 may rotate while overlapping the base member 600. The second rotation arm 620 may rotate with at least a part of the second rotation arm 620 overlapping or in contact with the base member 600, so that the second rotation arm 620 may not disengage from the first hinge assembly 510 in the process of rotating. For example, the base member 600 may guide the rotation of the second rotation arm 620. As the base member 600 guides the rotation of the second rotation arm 620, the second rotation arm 620 may rotate about a rotation axis.

According to an embodiment of the disclosure, the second rotation arm 620 may be connected with the second spiral arm 640. For example, the second rotation arm 620 may be fastened to the second spiral arm 640 through a fastening mechanism. For example, as the second rotation arm 620 rotates, the second rotation arm 620 and the second spiral arm 640 may rotate together.

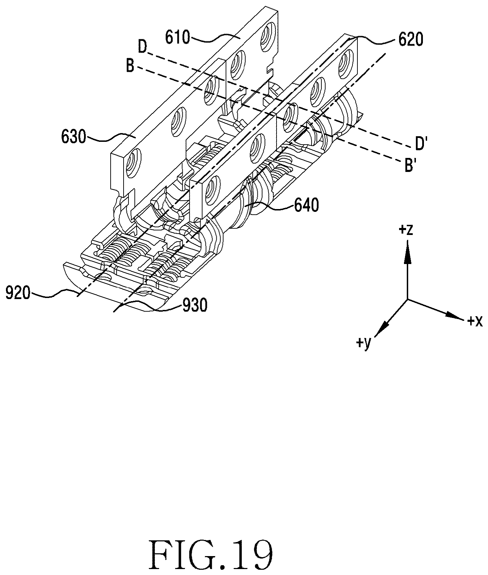

An example of the first spiral arm 630 rotating with the first rotation arm 610 and the second spiral arm 640 rotating with the second rotation arm 620 will be described below in FIG. 19.

According to an embodiment of the disclosure, the first spiral arm 630 may rotate in connection with the second housing 120. For example, the first spiral arm 630 may be fastened to the second housing 120 through a fastening mechanism. For example, as the first spiral arm 630 rotates, the second housing 120 may rotate.

According to an embodiment of the disclosure, the first spiral arm 630 may rotate about the same rotation axis as the first rotation arm 610. For example, the first spiral arm 630 may be connected with the first rotation arm 610 through a fastening mechanism. For example, as the first rotation arm 610 rotates, the first spiral arm 630 may also rotate.

According to an embodiment of the disclosure, the second spiral arm 640 may rotate in connection with the third housing 130. For example, the second spiral arm 640 may be fastened to the third housing 130 through a fastening mechanism. For example, as the second spiral arm 640 rotates, the third housing 130 may rotate.

According to an embodiment of the disclosure, the second spiral arm 640 may rotate about the same rotation axis as the second rotation arm 620. For example, the second spiral arm 640 may be connected with the second rotation arm 620 through a fastening mechanism. For example, as the second rotation arm 620 rotates, the second spiral arm 640 may also rotate.

According to an embodiment of the disclosure, the slider member 670 may be disposed on the base member 600. The slider member 670 may guide the rotation of the first spiral arm 630 and the second spiral arm 640. For example, with at least a part of the first spiral arm 630 disposed on at least a part of the slider member 670, the first spiral arm 630 may rotate while being guided by the slider member 670. For example, with at least a part of the second spiral arm 640 disposed on a different part from the at least part of the slider member 670, the second spiral arm 640 may rotate while being guided by the slider member 670.

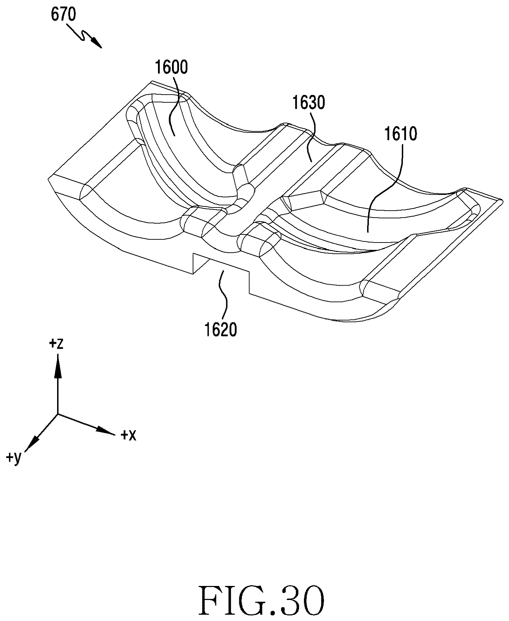

An example of the first spiral arm 630 rotating while being disposed on at least a part of the slider member 670 will be described in more detail below with reference to FIGS. 30 to 31.

According to an embodiment of the disclosure, as at least one of the first spiral arm 630 or the second spiral arm 640 rotates about a rotation axis, the slider member 670 may move in a direction parallel with the rotation axis. The slider member 670 may move along the base member 600 in the direction parallel with the rotation axis.

According to an embodiment of the disclosure, the first spiral arm 630 may be disposed between the first cam structure 650 and the second cam structure 660. One side of the first spiral arm 630 may be disposed on the first cam structure 650. For example, at least a part of the one side of the first spiral arm 630 may contact the first cam structure 650. For example, at least a part of the one side of the first spiral arm 630 may be disposed to overlap the first cam structure 650. The other side of the first spiral arm 630 may be disposed on the second cam structure 660. For example, at least a part of the other side of the first spiral arm 630 may contact the second cam structure 660. For example, at least a part of the other side of the first spiral arm 630 may be disposed to overlap the second cam structure 660.

According to an embodiment of the disclosure, as the first spiral arm 630 rotates, the first cam structure 650 and the second cam structure 660 may move in a direction parallel with the rotation axis of the first spiral arm 630. For example, the first cam structure 650 may move in a third direction parallel with the rotation axis of the first spiral arm 630. For example, the second cam structure 660 may move in a fourth direction that is opposite to the third direction of the first spiral arm 630.

According to an embodiment of the disclosure, as the first cam structure 650 moves in the third direction, the first elastic member 681 may be compressed in the third direction. The first elastic member 681 compressed in the third direction may exert an elastic force on the first cam structure 650 in the fourth direction. The first cam structure 650 on which the elastic force is exerted may exert a force on one side of the first spiral arm 630 in the fourth direction. As the second cam structure 660 moves in the fourth direction, the third elastic member 683 may be compressed in the fourth direction. The third elastic member 683 compressed in the fourth direction may exert an elastic force on the second cam structure 660 in the third direction. The second cam structure 660 on which the elastic force is exerted may exert a force on the other side of the first spiral arm 630 in the third direction.

According to an embodiment of the disclosure, the first cam structure 650 may push one side of the first spiral arm 630 in the fourth direction, and the second cam structure 660 may push the other side of the first spiral arm 630 in the third direction, such that the first spiral arm 630 may be fixed. As the first spiral arm 630 is fixed, the second housing 120 may be fixed. For example, in the process in which the second housing 120 is rotated by the second hinge structure 150, a predetermined angle may be maintained by the fixed first spiral arm 630.

According to an embodiment of the disclosure, the second spiral arm 640 may be disposed between the first cam structure 650 and the second cam structure 660. One side of the second spiral arm 640 may be disposed on the first cam structure 650. For example, at least a part of the one side of the second spiral arm 640 may be disposed to contact the first cam structure 650. For example, at least a part of the one side of the second spiral arm 640 may be disposed to overlap the first cam structure 650. The other side of the second spiral arm 640 may be disposed on the second cam structure 660. For example, at least a part of the other side of the second spiral arm 640 may be disposed to contact the second cam structure 660. For example, at least a part of the other side of the second spiral arm 640 may be disposed to overlap the second cam structure 660.

According to an embodiment of the disclosure, as the second spiral arm 640 rotates, the first cam structure 650 and the second cam structure 660 may move in a direction parallel with the rotation axis of the second spiral arm 640. For example, the first cam structure 650 may move in the third direction parallel with the rotation axis of the second spiral arm 640. For example, the second cam structure 660 may move in the fourth direction that is opposite to the third direction of the second spiral arm 640.

According to an embodiment of disclosure, as the first cam structure 650 moves in the third direction, the second elastic member 682 may be compressed in the third direction. **The** second elastic member 682 compressed in the third direction may exert an elastic force on the first cam structure 650 in the fourth direction. **The** first cam structure 650 on which the elastic force is exerted may exert a force on one side of the second spiral arm 640 in the fourth direction. As the second cam structure 660 moves in the fourth direction, the fourth elastic member 684 may be compressed in the fourth direction. **The** fourth elastic member 684 compressed in the fourth direction may exert an elastic force on the second cam structure 660 in the third direction. **The** second cam structure 660 on which the elastic force is exerted may exert a force on the other side of the second spiral arm 640 in the third direction.

According to an embodiment of the disclosure, the first cam structure 650 may push one side of the second spiral arm 640 in the fourth direction, and the second cam structure 660 may push the other side of the second spiral arm 640 in the third direction, such that the second spiral arm 640 may be fixed. As the second spiral arm 640 is fixed, the third housing 130 may be fixed. For example, in the process in which the third housing 130 is rotated by the second hinge structure 150, a predetermined angle may be maintained by the fixed second spiral arm 640.

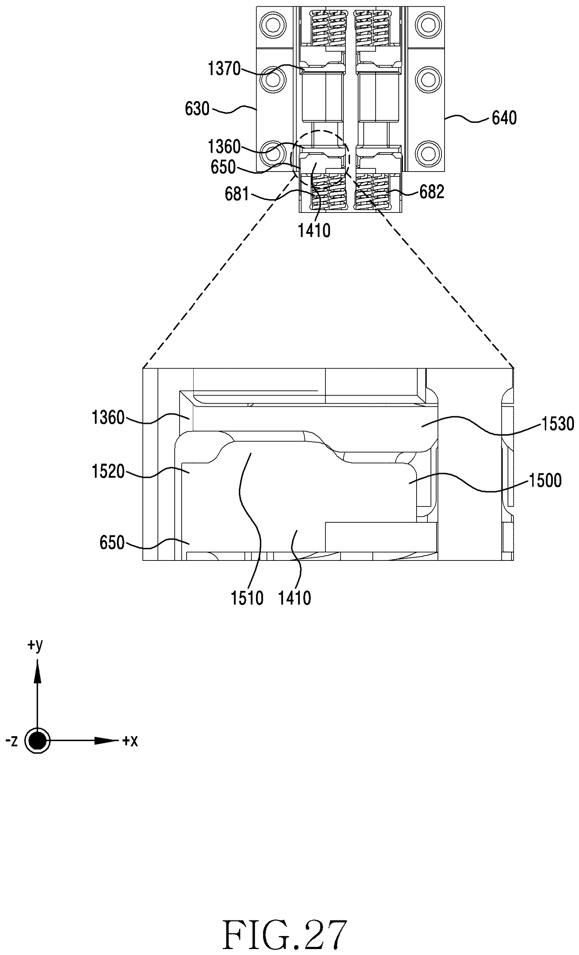

The process in which the cam structures 650, 660 move according to rotation of the spiral arms 630, 640 and the elastic members 680 are compressed according to movement of the cam structures 650, 660 will be described in more detail with reference to FIGS. 27 to 29.

According to an embodiment of the disclosure, the first cam structure 650 and the second cam structure 660 may be disposed on the base member 600. As the first spiral arm 630 or the second spiral arm 640 rotates, the first cam structure 650 and the second cam structure 660 may move along the base member 600 in the direction parallel to the rotation axis of the first spiral arm 630 or the rotation axis of the second spiral arm 640.

According to an embodiment of the disclosure, the first elastic member 681 and the second elastic member 682 may be disposed between the first cam structure 650 and the base member 600. In the process in which the first cam structure 650 applies forces to the first elastic member 681 and the second elastic member 682, the base member 600 may prevent the first elastic member 681 and the second elastic member 682 from disengaging from the first hinge assembly 510. The third elastic member 683 and the fourth elastic member 684 may be disposed between the second cam structure 660 and the base member 600. In the process in which the second cam structure 660 applies forces to the third elastic member 683 and the fourth elastic member 684, the base member 600 may prevent the third elastic member 683 and the fourth elastic member 684 from disengaging from the first hinge assembly 510.

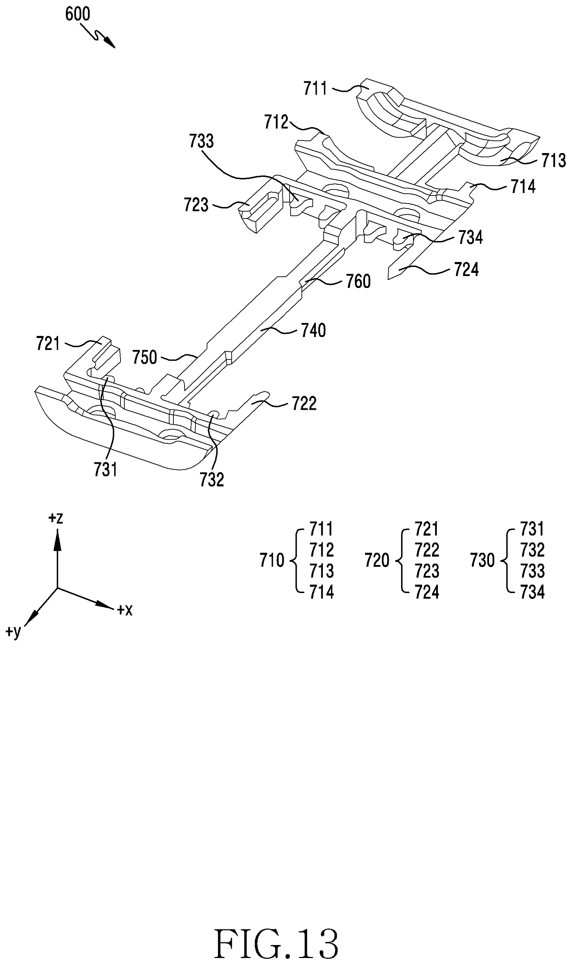

The movement of the cam structures 650, 660 along the base member 600, and the arrangement relationship among the cam structures 650, 660, the elastic members 680, and the base member 600 will be described in more detail below in FIG. 13.

FIG. 13 is a perspective view of the base member according to an embodiment.

According to an embodiment of the disclosure, the base member 600 may include a plurality of guide portions 710. For example, the plurality of guide portions 710 may include a first guide portion 711, a second guide portion 712, a third guide portion 713, and a fourth guide portion 714.

According to an embodiment of the disclosure, the first guide portion 711 and the second guide portion 712 may guide rotation of the first rotation arm 610 disposed between the first guide portion 711 and the second guide portion 712. For example, one side of the first rotation arm 610 may rotate by moving along the shape of the first guide portion 711 in contact with the first guide portion 711. For example, the other side of the first rotation arm 610 may rotate by moving along the shape of the second guide portion 712 in contact with the second guide portion 712. For example, at least a part of the one side of the first rotation arm 610 may rotate in contact with the first guide portion 711. For example, at least a part of the one side of the first rotation arm 610 may rotate while overlapping the first guide portion 711. For example, at least a part of the other side of the first rotation arm 610 may rotate in contact with the second guide portion 712. For example, at least a part of the other side of the first rotation arm 610 may rotate while overlapping the second guide portion 712.

According to an embodiment of the disclosure, the third guide portion 713 and the fourth guide portion 714 may guide rotation of the second rotation arm 620 disposed between the third guide portion 713 and the fourth guide portion 714. For example, one side of the second rotation arm 620 may rotate by moving in contact with the third guide portion 713. For example, the other side of the second rotation arm 620 may rotate by moving in contact with the fourth guide portion 714. For example, at least a part of the one side of the second rotation arm 620 may rotate while overlapping the third guide portion 713. For example, at least a part of the other side of the second rotation arm 620 may rotate while overlapping the fourth guide portion 714.

According to an embodiment of the disclosure, the first rotation arm 610 may rotate while being guided by the first guide portion 711 and the second guide portion 712, and the second rotation arm 620 may rotate while being guided by the third guide portion 713 and the fourth guide portion 714, such that the first guide portion 711, the second guide portion 712, the third guide portion 713, and the fourth guide portion 714 may prevent the first rotation arm 610 and the second rotating arm 620 from disengaging from the base member 610.

According to an embodiment of the disclosure, a first rail portion 740 of the base member 600 may be formed in the direction parallel with the rotation axis of the first spiral arm 630 and/or the rotation axis of the second spiral arm 640. As the first spiral arm 630 or the second spiral arm 640 rotates, the slider member 670 may move in the direction parallel to the rotation of the first spiral arm 630 and/or the rotation axis of the second spiral arm 640. **The** slider member 670 may move along the base member 600. For example, the slider member 670 may be disposed on the first rail portion 740 of the base member 600. With the slider member 670 being disposed on the first rail portion 740, the slider member 670 may move along the first rail portion 740 in the direction parallel to the rotation axis of the first spiral arm 630 or the second spiral arm 640.

The arrangement relationship of the slider member 670, the first spiral arm 630, and the second spiral arm 640 will be described in more detail with reference to FIG. 30.

According to an embodiment of the disclosure, a second rail portion 750 and a third rail portion 760 of the base member 600 may be formed by extending from the first rail portion 740, respectively, and may be formed in the direction parallel to the rotation axes of the spiral arms 630, 640. As the spiral arms 630, 640 rotate about the rotation axes, the first cam structure 650 and the second cam structure 660 may move in the direction parallel to the rotation axes. For example, the first cam structure 650 may move along the second rail portion 750 of the base member 600 in the third direction parallel to the rotation axes. For example, the second cam structure 660 may move along the third rail portion 760 of the base member 600 in the fourth direction that is parallel to the rotation axes and is opposite to the third direction.

According to an embodiment of the disclosure, as the first cam structure 650 and the second cam structure 660 move along the second rail portion 750 and the third rail portion 760 of the base member 600, seating portions 720 may guide the first cam structure 650 and the second cam structure 660. For example, the seating portions 720 may include a first seating portion 721, a second seating portion 722, a third seating portion 723, and a fourth seating portion 724.

According to an embodiment of the disclosure, the first seating portion 721 and the third seating portion 722 may guide movement of the first cam structure 650. For example, one side of the first cam structure 650 may be disposed or seated on the first seating portion 721. For example, the other side of the first cam structure 650 may be disposed or seated on the second seating portion 722. With the first cam structure 650 being disposed or seated on the first seating portion 721 and the second seating portion 722, the first cam structure 650 may move along the second rail portion 750 parallel to the rotation axis. As the first seating portion 721 and the second seating portion 722 guide the first cam structure 650, the first cam structure 650 may not disengage from the base member 600.

According to an embodiment of the disclosure, the third seating portion 723 and the fourth seating portion 724 may guide movement of the second cam structure 660. For example, one side of the second cam structure 660 may be disposed or seated on the third seating portion 723. For example, the other side of the second cam structure 660 may be disposed or seated on the fourth seating portion 724. With the second cam structure 660 being disposed or seated on the third seating portion 723 and the fourth seating portion 724, the second cam structure 660 may move along the third rail portion 760 parallel to the rotation axis. As the third seating portion 723 and the fourth seating portion 724 guide the second cam structure 660, the second cam structure 660 may not disengage from the base member 600.

According to an embodiment of the disclosure, the first elastic member 681 and the second elastic member 682 may be disposed on a first protrusions 731 and a second protrusion 732 formed on the base member 600. According to an embodiment, the first elastic member 681 and the second elastic member 682 may be disposed between the base member 600 and the first cam structure 650. As the first cam structure 650 moves in the third direction parallel to the rotation axis, the first elastic member 681 and the second elastic member 682 may be compressed. In the process in which the first elastic member 681 and the second elastic member 682 are compressed, the first protrusions 731 and the second protrusions 732 formed on the base member 600 may guide the first elastic member 681 and the second elastic member 682 to prevent the first elastic member 681 and the second elastic member 682 from disengaging from the base member 600.

According to an embodiment of the disclosure, the third elastic member 683 and the fourth elastic member 684 may be disposed on a third protrusion 733 and a fourth protrusion 734 formed on the base member 600. According to an embodiment, the third elastic member 683 and the fourth elastic member 684 may be disposed between the base member 600 and the second cam structure 660. As the second cam structure 660 moves in the fourth direction that is parallel to the rotation axis and is opposite to the third direction, the third elastic member 683 and the fourth elastic member 684 may be compressed. In the process in which the third elastic member 683 and the fourth elastic member 684 are compressed, the third protrusion 733 and the fourth protrusion 734 formed on the base member 600 may guide the third elastic member 683 and the fourth elastic member 684 to prevent the third elastic member 683 and the fourth elastic member 684 from disengaging from the base member 600.

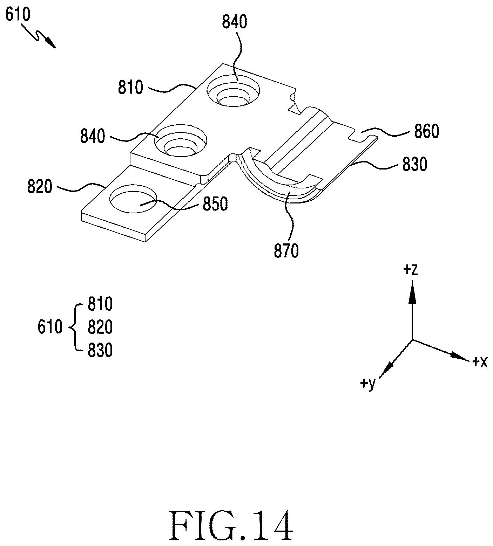

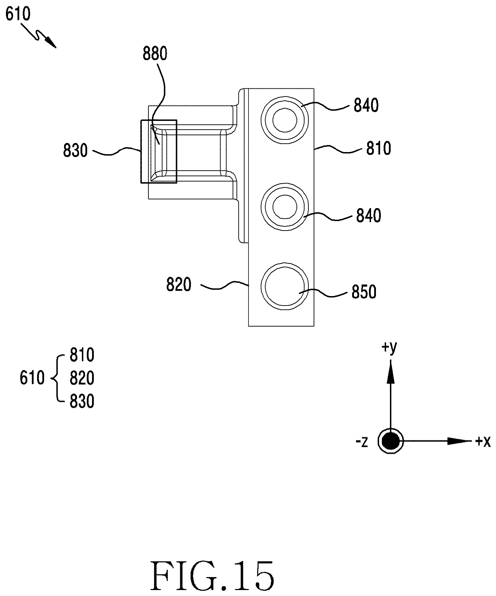

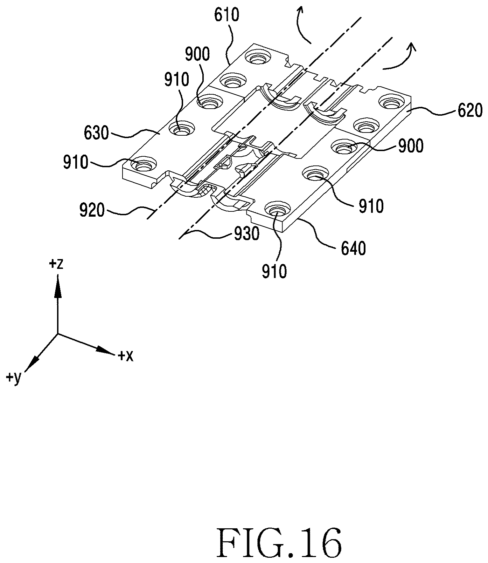

FIG. 14 is a perspective view illustrating a front surface of the first rotation arm according to an embodiment. FIG. 15 is a perspective view illustrating a rear surface of the first rotation arm according to an embodiment. FIG. 16 is a perspective view illustrating rotation axes of arms according to an embodiment.

The descriptions of FIGS. 14 to 16 may be equally applied to the second rotation arm 620.

According to an embodiment of the disclosure, referring to FIGS. 14 to 16, the first rotation arm 610 may include a first portion 810, a second portion 820, and a third portion 830. The first rotation arm 610 may be fastened to the second housing 120 through the first portion 810. For example, the first portion 810 may include at least one first opening 840. The first rotation arm 610 may be fastened to the second housing 120 through the at least one first opening 840 by means of a fastening mechanism.

According to an embodiment of the disclosure, the first rotation arm 610 may include the second portion 820 that is connected with the first spiral arm 630. For example, the second portion 820 may include at least one second opening 850 formed for a fastening mechanism to penetrate therethrough. For example, at least a part of the first spiral arm 630 may contact the second portion 820 of the first rotation arm 610. For example, at least a part of the first spiral arm 630 may be disposed to overlap the second portion 820 of the first rotation arm 610. For example, with at least a part of the first spiral arm 630 being disposed to contact or overlap the second portion 820 of the first rotation arm 610, a fastening mechanism may penetrate through the at least one second opening 850, such that the first rotation arm 610 may be fastened to the first spiral arm 630. The fastening mechanism penetrating through the at least one second opening 850 may be fastened to the second housing 120, such that the second housing 120, the first rotation arm 610, and the first spiral arm 630 are connected.

According to an embodiment of the disclosure, the first rotation arm 610 may include the third portion 830 that rotates the first rotation arm 610. For example, the third portion 830 may be a portion that extends from the first portion 810. The third portion 830 may be disposed between the first guide portion 711 and the second guide portion 712 of the base member 600. The third portion 830 may rotate while being disposed between the first guide portion 711 and the second guide portion 712 of the base member 600.

According to an embodiment of the disclosure, one side of the third portion 830 may include a first slide groove portion 860 and a second slide groove portion 870. For example, the first guide portion 711 of the base member 600 may be inserted into the first slide groove portion 860. For example, the second guide portion 712 of the base member 600 may be inserted into the second slide groove portion 870. The first rotation arm 610 may be guided to rotate by the first guide portion 711 and the second guide portion 712 of the base member 600 through the first slide groove portion 860 and the second slide groove portion 870.

According to an embodiment of the disclosure, a first locking portion 880 may be formed on a certain surface of the third portion 830 of the first rotation arm 610 that faces the second direction (-z axis direction). The first locking portion 880 may prevent the first rotation arm 610 from disengaging from the base member 600 by preventing the first rotation arm 610 from rotating by a predetermined angle or more.

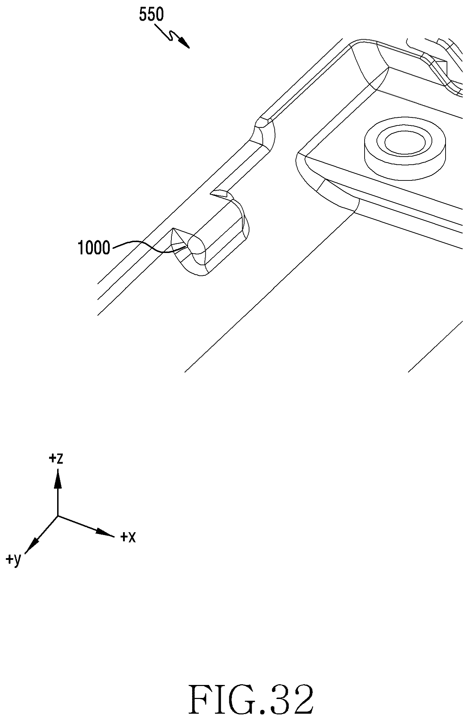

The first locking portion 880 will be described in detail with reference to FIGS. 32 to 35.

According to an embodiment of the disclosure, FIG. 16 illustrates the first hinge assembly 510 of the second hinge structure 150 in the first state or the second state of the foldable electronic device 100. Only the first spiral arm 630 and the first rotation arm 610 are described in FIG. 16 for convenience, but the same descriptions may be applied to the second spiral arm 640 and the second rotation arm 620.

In an embodiment of the disclosure, the first rotation arm 610 and the first spiral arm 630 may be connected. The first rotation arm 610 may be fastened to the first spiral arm 630. For example, the first rotation arm 610 may be fastened to the first spiral arm 630 through at least one fastening mechanism. The first rotation arm 610 may be fastened to the first spiral arm 630 through at least one third opening 900 of the first rotation arm 610. The at least one fastening mechanism may be disposed to penetrate through the at least one third opening 900 of the first rotation arm.

In an embodiment of the disclosure, the first spiral arm 630 may include at least one opening. For example, the at least one opening of the first spiral arm 630 may be formed to correspond to the at least one third opening 900 of the first rotation arm 610. For example, the at least one opening of the first spiral arm 630 may be in contact with the at least one third opening 900 of the first rotation arm 610. For example, the at least one opening of the first spiral arm 630 may be disposed to overlap the at least one third opening 900 of the first rotation arm 610. The fastening mechanism may be disposed to penetrate through the at least one opening 900 of the first rotation arm 610 and the at least one opening of the first spiral arm 630 which is disposed to contact or overlap the at least one third opening 900, such that the first rotation arm 610 and the first spiral arm 630 may be fastened to each other.

In an embodiment of the disclosure, the first rotation arm 610 may rotate about a first rotation axis 920 that is the same rotation axis as the first spiral arm 630. For example, the first rotation arm 610 may be connected with the first spiral arm 630 through the fastening mechanism, thereby rotating about the first rotation axis 920. The second rotation arm 620 may rotate about a second rotation axis 930, which is the same rotation axis as the second spiral arm 640. For example, the second rotation arm 620 may be connected with the second spiral arm 640 through a fastening mechanism, thereby rotating about the second rotation axis 930. For example, the first rotation axis 920 may be formed substantially parallel with the second rotation axis 930. For example, the first rotation axis 920 may be substantially parallel with the second rotation axis 930.

In an embodiment of the disclosure, the first spiral arm 630 may rotate about the first rotation axis 920 as the first rotation arm 610 rotates about the first rotation axis 920. As the first rotation arm 610 and the first spiral arm 630 rotate about the first rotation axis 920, the second housing 120 connected to the first rotation arm 610 and the first spiral arm 630 may rotate. As the second rotation arm 620 rotates about the second rotation axis 930, the second spiral arm 640 may rotate about the second rotation axis 930. As the second rotation arm 620 and the second spiral arm 640 rotate about the second rotation axis 930, the third housing 130 connected to the second rotation arm 620 and the second spiral arm 640 may rotate.

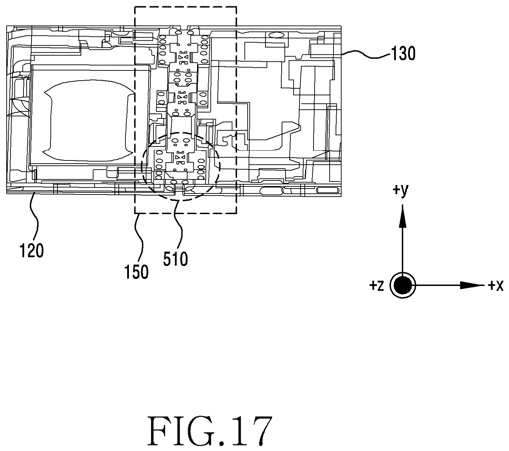

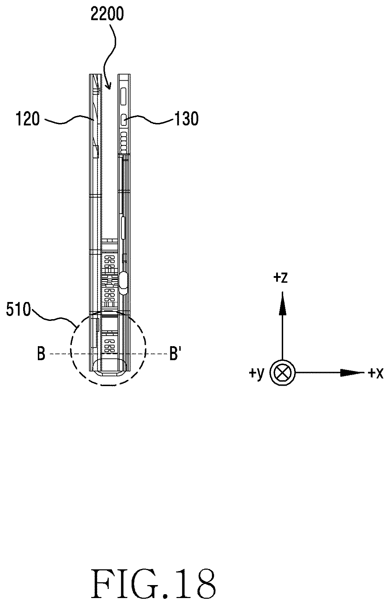

FIG. 17 is a view illustrating the second hinge structure in the unfolded state of the foldable electronic device according to an embodiment. FIG. 18 is a view illustrating the second hinge structure in the folded state of the foldable electronic device according to an embodiment.

According to an embodiment of the disclosure, FIG. 17 is a view illustrating the second hinge structure 150 in the first or second state of the foldable electronic device 100. FIG. 18 is a view illustrating the second hinge structure 150 in the third state of the foldable electronic device 100.

In an embodiment of the disclosure, the second housing 120 and the third housing 130 may be rotated by the second hinge structure 150. As the second housing 120 or the third housing 130 is rotated, the foldable electronic device 100 may be unfolded. The second hinge structure 150 may include the hinge assemblies 500. The hinge assemblies 500 may be connected to the second housing 120 and the third housing 130. The hinge assemblies 500 may be fastened to the second housing 120 and the third housing 130 through a fastening mechanism.

In an embodiment of the disclosure, the hinge assemblies 500 may include the first hinge assembly 510. The first rotation arm 610 and the first spiral arm 630 of the first hinge assembly 510 may be fastened to the second housing 120. The second rotation arm 620 and the second spiral arm 640 of the first hinge assembly 510 may be fastened to the third housing 130.

In an embodiment of the disclosure, the second housing 120 and the third housing 130 may be rotated by the second hinge structure 150. As the second housing 120 or the third housing 130 rotates, the foldable electronic device 100 may be folded. As the first rotation arm 610 and the first spiral arm 630 which are fastened to the second housing 120 rotate about the first rotation axis 920, the second housing 120 may rotate. As the second rotation arm 620 and the second spiral arm 640 which are fastened to the third housing 130 rotate about the second rotation axis 930, the third housing 130 may rotate.

In an embodiment of the disclosure, in the third state of the foldable electronic device 100 of FIG. 5, a space 2200 may be formed by the second housing 120 and the third housing 130. At least a part of the first housing 110 may be disposed in the space formed by the second housing 120 and the third housing 130.

In an embodiment of the disclosure, a width of the second hinge structure 150 may correspond to a width of the space 2200 formed between the second housing 120 and the third housing 130. For example, the width of the space 2200 formed between the second housing 120 and the third housing 130 may correspond to a length between the first rotation axis 920 and the second rotation axis 930. In order for the first housing 110 to be disposed in the space 2200 formed by the second housing 120 and the third housing 130, the width of the second hinge structure 150 may be wider than the width of the first hinge structure 140.

FIG. 19 is a view illustrating the first hinge assembly in the folded state of the foldable electronic device according to an embodiment.

In an embodiment of the disclosure, FIG. 19 is a view illustrating a state of the first hinge assembly 510 in the third state of the foldable electronic device 100. As the first rotation arm 610 rotates about the first rotation axis 920, the first spiral arm 630 connected to the first rotation arm 610 may rotate about the first rotation axis 920. As the second rotation arm 620 rotates about the second rotation axis 930, the second spiral arm 640 connected to the second rotation arm 620 may rotate about the second rotation axis 930.

In an embodiment of the disclosure, referring to FIG. 19, the first rotation arm 610 may be disposed to face the first spiral arm 630. For example, the first rotation arm 610 and the second rotation arm 620 may be disposed to be perpendicular to the slider member 670. The first spiral arm 630 may be disposed to face the second spiral arm 640. For example, the first spiral arm 630 and the second spiral arm 640 may be disposed to be perpendicular to the slider member 670.

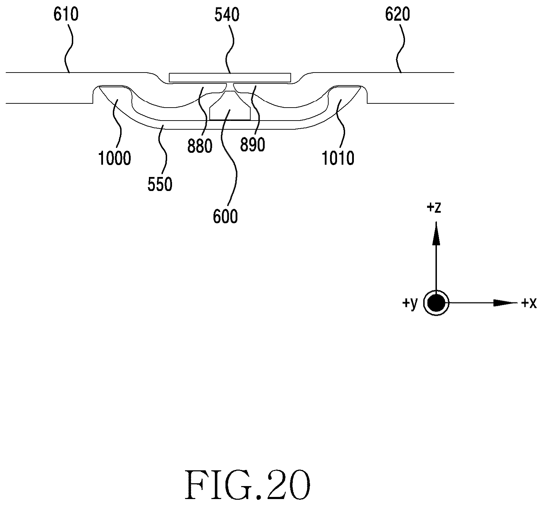

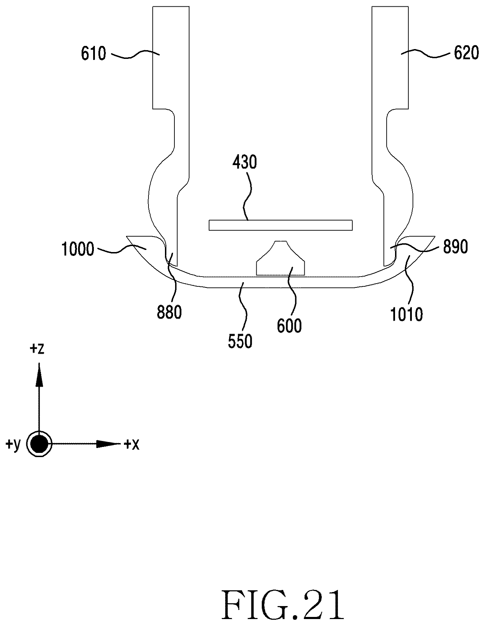

FIG. 20 is a cross-sectional view of a cross-section A-A' of the first hinge assembly of FIG. 11 according to an embodiment. FIG. 21 is a cross-sectional view of a cross-section B-B' of the first hinge assembly of FIG. 19 according to an embodiment one embodiment.

In an embodiment of the disclosure, referring to FIG. 20, the cross-section A-A' is a cross-sectional view of a part of the first hinge assembly 510 in the first state or the second state of the foldable electronic device 100. At least a part of the first rotation arm 610 may be disposed between the support plate 540 and the hinge housing 550. For example, the third portion 830 of the first rotation arm 610 may be disposed between the support plate 540 and the hinge housing 550. The third portion 830 of the first rotation arm 610 may rotate in a space between the support plate 540 and the hinge housing 550.

In an embodiment of the disclosure, at least a part of the second rotation arm 620 may be disposed between the support plate 540 and the hinge housing 550. For example, the third portion (not shown) of the second rotation arm 620 may be disposed between the support plate 540 and the hinge housing 550. The third portion (not shown) of the second rotation arm 620 may rotate in a space between the support plate 540 and the hinge housing 550. The first rotation arm 610 and the second rotation arm 620 may be disposed symmetrically with respect to the base member 600.

In an embodiment of the disclosure, referring to FIG. 21, the cross-sectional view B-B' is a cross-sectional view of a part of the first hinge assembly 510 in the third state of the foldable electronic device 100. The first rotation arm 610 may include the first locking portion 880. The hinge housing 550 may include a first stopper 1000. In the third state of the foldable electronic device 100, at least a part of the first rotation arm 610 may contact the hinge housing 550. For example, in the third state of the foldable electronic device 100, the first locking portion 880 of the first rotation arm 610 may contact the first stopper 1000 of the hinge housing 550. The first locking portion 880 of the first rotation arm 610 may contact the first stopper 1000 of the hinge housing 550, such that the first stopper 1000 may prevent the first rotation arm 610 from rotating by a predetermined angle or more. For example, the first stopper 1000 may prevent the first rotation arm 610 from rotating by a predetermined angle or more (e.g., 90 degrees or more) relative to the base member 600.

In an embodiment of the disclosure, the second rotation arm 620 may include a second locking portion 890. The hinge housing 550 may include a second stopper 1010. In the third state of the foldable electronic device 100, at least a part of the second rotation arm 620 may contact the hinge housing 550. For example, in the third state of the foldable electronic device 100, the second locking portion 890 of the second rotation arm 620 may contact the second stopper 1010 of the hinge housing 550. The second locking portion 890 of the second rotation arm 620 may contact the second stopper 1010 of the hinge housing 550, such that the second stopper 1010 may prevent the second rotation arm 620 from rotating by a predetermined angle or more. For example, the second stopper 1010 may prevent the second rotation arm 620 from rotating by 90 degrees or more relative to the base member 600.

The stoppers 1000, 1010 and the locking portions 880, 890 will be described in more detail with reference to FIGS. 32 to 35.

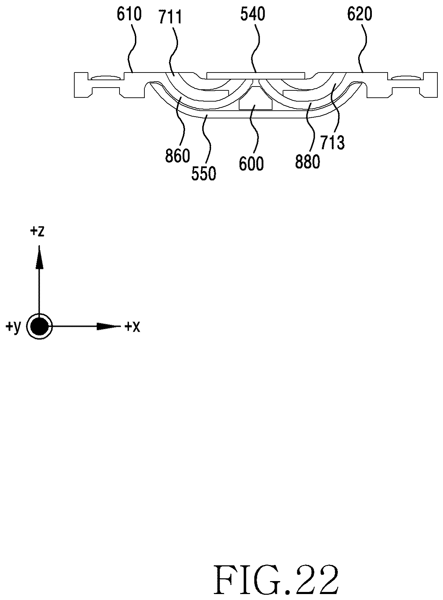

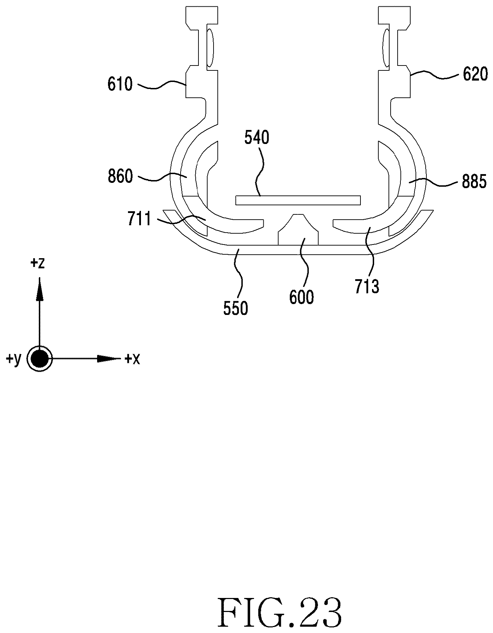

FIG. 22 is a cross-sectional view of a cross-sections C-C' of the first hinge assembly of FIG. 11 according to an embodiment. FIG. 23 is a cross-sectional view of a cross-section D-D' of the first hinge assembly of FIG. 19 according to an embodiment.

According to an embodiment of the disclosure, referring to FIG. 22, in the first state or second state of the foldable electronic device 100, at least a part of the first rotation arm 610 may be disposed on at least a part of the base member 600. For example, at least a part of the third portion 830 of the first rotation arm 610 may be disposed to overlap at least a part of the base member 600. For example, at least a part of the third portion 830 of the first rotation arm 610 may be disposed to contact at least a part of the base member 600. For example, the first guide portion 711 of the base member 600 may overlap or contact the first slide groove portion 860 of the first rotation arm 610, and the second guide portion 712 may overlap or contact the second slide groove portion 870. For example, the first guide portion 711 of the base member 600 may be inserted into the first slide groove portion 860 of the first rotation arm 610, and the second guide portion 712 may be inserted into the second slide groove portion 870.

In the first state or the second state of the foldable electronic device 100, at least a part of the second rotation arm 620 may be disposed on at least a part of the base member 600. For example, at least a part of the third portion (not shown) of the second rotation arm 620 may be disposed to contact at least a part of the base member 600. For example, at least a part of the third portion (not shown) of the second rotation arm 620 may be disposed to overlap at least a part of the base member 600. For example, the third guide portion 713 of the base member 600 may contact or overlap a third slide groove portion 885 of the second rotation arm 620, and the fourth guide portion 714 may contact or overlap a fourth slide groove portion (not shown). For example, the third guide portion 713 of the base member 600 may be inserted into the third slide groove portion 885 of the second rotation arm 620, and the fourth guide portion 714 may be inserted into the fourth slide groove portion (not shown).

According to an embodiment, referring to FIG. 23, the first rotation arm 610 may rotate along at least a part of the base member 600. The first rotation arm 610 may be guided to rotate by at least a part of the base member 600. For example, the first rotation arm 610 may be guided to rotate by the first guide portion 711 of the base member 600 inserted into the first slide groove portion 860 and the second guide portion 712 inserted into the second slide groove portion 870. As the first rotation arm 610 is guided to rotate by the base member 600, the first rotation arm 610 may not disengage from the base member 600.

According to an embodiment, referring to FIG. 23, the second rotation arm 620 may rotate along at least a part of the base member 600. The second rotation arm 620 may be guided to rotate by at least a part of the base member 600. For example, the second rotation arm 620 may be guided to rotate by the third guide portion 713 of the base member 600 inserted into the third slide groove portion 885 and the fourth guide portion 714 inserted into the fourth slide groove portion (not shown). As the second rotation arm 620 is guided to rotate by the base member 600, the second rotation arm 620 may not disengage from the base member 600.

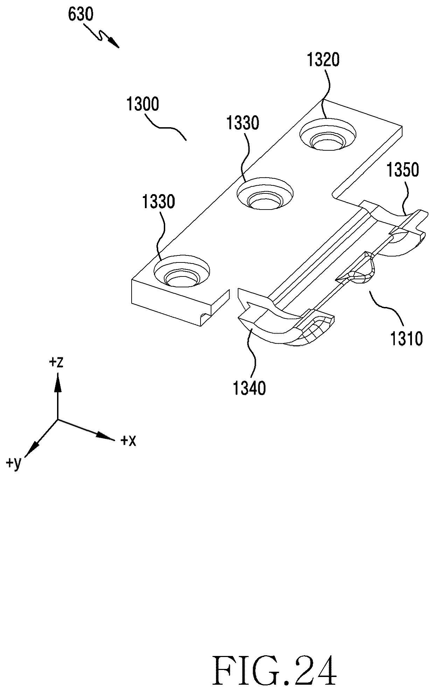

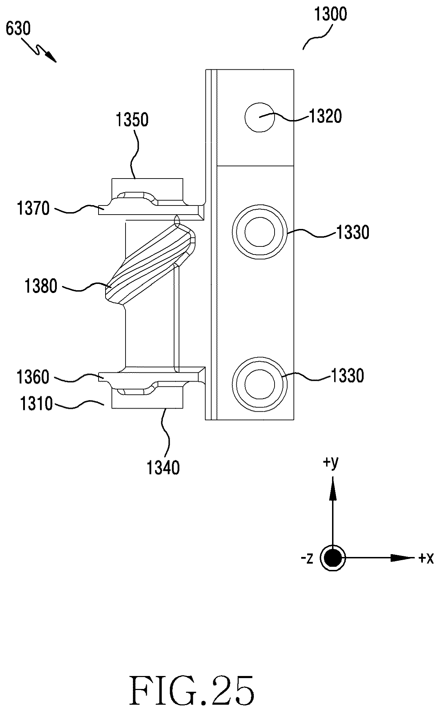

FIG. 24 is a front view illustrating a front surface of the first spiral arm according to an embodiment. FIG. 25 is a rear view illustrating a rear surface of the first spiral arm according to an embodiment.

While the descriptions of FIGS. 24 to 25 relate only to the first spiral arm 630, the descriptions may be equally applied to the second spiral arm 640.

According to an embodiment of the disclosure, the first spiral arm 630 may include a first portion 1300 and a second portion 1310 which extends from the first portion 1300. The first portion 1300 of the first spiral arm 630 may include at least one third opening 1320 and at least one fourth opening 1330. The second portion 1310 of the first spiral arm 630 may include a first rotation portion 1340, a second rotation portion 1350, a first cam portion 1360, a second cam portion 1370, and a first rotation protrusion 1380.

According to an embodiment of the disclosure, the first spiral arm 630 may be connected with the first rotation arm 610. The first spiral arm 630 may be connected with the first rotation arm 610 via the at least one third opening 1320 of the first spiral arm 630. For example, with the at least one third opening 1320 of the first spiral arm 630 being disposed to contact or overlap the at least one second opening 850 of the first rotation arm 610, at least one fastening mechanism may be disposed to penetrate through the at least one second opening 850 and the at least one third opening 1320, such that the first spiral arm 630 may be connected with the first rotation arm 610.

According to an embodiment of the disclosure, the first spiral arm 630 may be connected with the second housing 120. The first spiral arm 630 may be connected with the second housing 120 through the at least one fourth opening 1330. For example, at least one fastening mechanism may be disposed to penetrate through the at least one fourth opening 1330 of the first spiral arm 630 and at least a part of the second housing 120, such that the first spiral arm 630 may be connected with the second housing 120.

According to an embodiment of the present disclosure, the first rotation portion 1340 and the second rotation portion 1350 of the first spiral arm 630 may be formed on the second portion 1310 of the first spiral arm 630. For example, the first rotation portion 1340 may be formed on one side of the second portion 1310 of the first spiral arm 630. For example, the second rotation portion 1350 may be formed on the other side of the second portion 1310 of the first spiral arm 630.

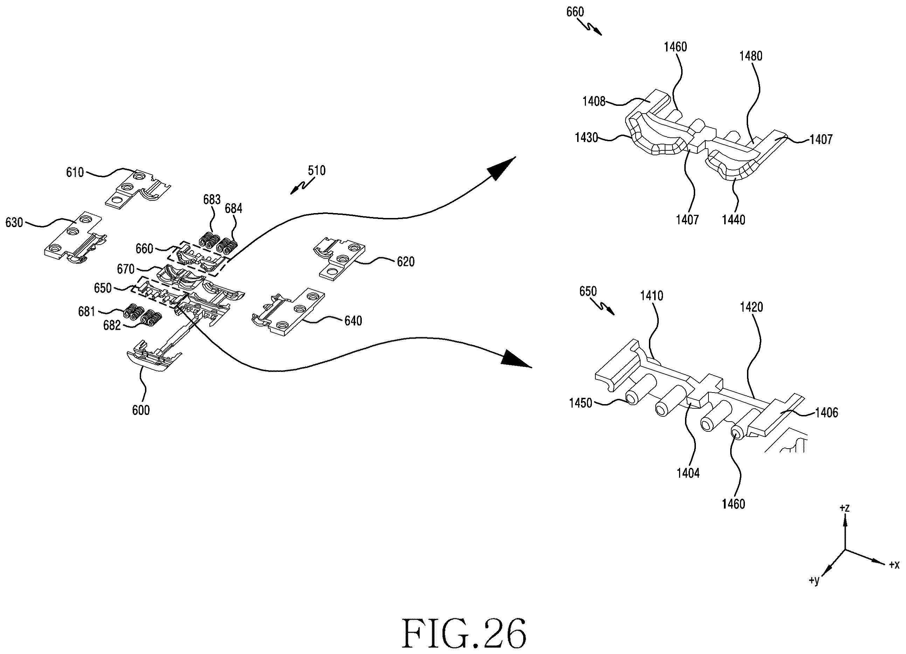

In an embodiment of the disclosure, at least a part of the second portion 1310 of the first spiral arm 630 may be disposed between the first cam structure 650 and the second cam structure 660. At least a part of the first rotation portion 1340 and the second rotation portion 1350 of the first spiral arm 630 may be disposed between the first cam structure 650 and the second cam structure 660. According to an embodiment, as a force is exerted on the first portion 1300 of the first spiral arm 630, the first rotation portion 1340 and the second rotation portion 1350 may rotate, such that the first spiral arm 630 may rotate. For example, with at least a part of the first rotation portion 1340 being disposed on at least a part of the first cam structure 650 and at least a part of the second rotation portion 1350 being disposed on at least a part of the second cam structure 660, the first rotation portion 1340 and the second rotation portion 1350 may move, such that the first spiral arm 630 may rotate. Positions of the first rotation portion 1340 and the second rotation portion 1350 on the first cam structure 650 will be described in more detail with reference to FIG. 26.

In an embodiment of the disclosure, the first cam portion 1360 and the second cam portion 1370 may be formed on the rear surface of the first spiral arm 630. For example, the first cam portion 1360 may be formed on at least a part of an outer circumference of the rear side of the first rotation portion 1340, and the second cam portion 1370 may be formed on at least a part of an outer circumference of the rear side of the second rotation portion 1350. For example, the first cam portion 1360 may be formed on at least a part of the outer circumference of the rear side of the first rotation portion 1340 to protrude in at least the second direction (-z axis direction). For example, the second cam portion 1370 may be formed on at least a part of the outer circumference of the rear side of the second rotation portion 1350 to protrude in at least the second direction (-z axis direction).

For example, the first cam portion 1360 may be formed on a certain side facing at least the second direction (-z axis direction) on the outer circumference of the first rotation portion 1340. The first cam portion 1360 may be formed on a certain side of the outer circumference of the first rotation portion 1340 in a protruding shape facing at least the second direction. For example, the second cam portion 1370 may be formed on a certain side facing at least the second direction (-z axis direction) on the outer circumference of the second rotation portion 1350. The second cam portion 1370 may be formed on a certain side of the outer circumference of the second rotation portion 1350 in a protruding shape facing at least the second direction.

In an embodiment of the disclosure, the first cam portion 1360 may include at least one convex portion and a concave portion. For example, the at least one convex portion may be shaped to protrude in the third direction (+y axis direction) which is parallel to the first rotation axis 920 of the first spiral arm 630. For example, the at least one concave portion may be recessed to face the fourth direction (-y axis direction) that is parallel to the first rotation axis 920 of the first spiral arm 630 and is opposite to the third direction. For example, the at least one convex portion may further protrude than the at least one concave portion to face the third direction (+y axis direction) parallel to the first rotation axis 920 of the first spiral arm 630.

In an embodiment of the disclosure, the second cam portion 1370 may include at least one convex portion and a concave portion. For example, the at least one convex portion may be shaped to protrude in the fourth direction (-y axis direction) which is parallel to the first rotation axis 920 of the first spiral arm 630. For example, the at least one concave portion may be recessed to face the third direction (+y axis direction) that is parallel to the first rotation axis 920 of the first spiral arm 630 and is opposite to the fourth direction. For example, the at least one convex portion may further protrude than the at least one concave portion to face the fourth direction (-y axis direction) parallel to the first rotation axis 920 of the first spiral arm 630.

The first cam portion 1360 and the second cam portion 1370 will be described in more detail later with reference to FIGS. 27 to 29.

In an embodiment of the disclosure, the first rotation protrusion 1380 may be formed on a rear side of the second portion 1310 of the first spiral arm 630. The first rotation protrusion 1380 may be formed between the first cam portion 1360 and the second cam portion 1370. The first rotation protrusion 1380 may be formed by spirally protruding along an outer circumference of the rear side of the second portion 1310. For example, the first rotation protrusion 1380 may be formed by protruding in at least the second direction (-z axis direction) on at least a part of the outer circumference of the rear side of the second portion 1310. For example, the spirally protruding shape of the first rotation protrusion 1380 may form an inclination between the first cam portion 1360 and the second cam portion 1380.

In an embodiment of the disclosure, with the first rotation protrusion 1380 being disposed on the slider member 670, the first spiral arm 630 may rotate. As the first spiral arm 630 rotates, the first rotation protrusion 1380 disposed on the slider member 670 may rotate. As the first rotation protrusion 1380 disposed on the slider member 670 rotates, the slider member 670 may move in the direction parallel with the first rotation axis 920 of the first spiral arm 630. The movement process and arrangement relationship of the first spiral arm 630 and the slider member 670 will be described in more detail with reference to FIGS. 30 to 31, which will be described below.

FIG. 26 is a perspective view of the first cam structure according to an embodiment.

In an embodiment of the disclosure, the first cam structure 650 may include a first rotation support portion 1410 and a second rotation support portion 1420. On the first rotation support portion 1410 of the first cam structure 650, at least a part of the first rotation portion 1340 of the first spiral arm 630 may be disposed. The shape of the first rotation support portion 1410 of the first cam structure 650 may be formed to correspond to the shape of the first rotation portion 1340 of the first spiral arm 630. The first rotation support portion 1410 of the first cam structure 650 may support the first rotation portion 1340 of the first spiral arm 630, and with the first rotation portion 1340 of the first spiral arm 630 being disposed on the first rotation support portion 1410 of the first cam structure 650, the first rotation portion 1340 of the first spiral arm 630 may rotate.

In an embodiment of the disclosure, at least a part of the third rotation portion (not shown) of the second spiral arm 640 may be disposed on the second rotation support portion 1420 of the first cam structure 650. The shape of the second rotation support portion 1420 of the first cam structure 650 may be formed to correspond to the shape of the third rotation portion (not shown) of the second spiral arm 640. The second rotation support portion 1410 of the first cam structure 650 may support the third rotation portion (not shown) of the second spiral arm 640, and with the third rotation portion (not shown) of the second spiral arm 640 being disposed on the second rotation support portion 1420 of the first cam structure 650, the third rotation portion (not shown) of the second spiral arm 640 may move.

In an embodiment of the disclosure, the second cam structure 660 may include a third rotation support portion 1430 and a fourth rotation support portion 1440. On the third rotation support portion 1430 of the second cam structure 660, at least a part of the second rotation portion 1350 of the first spiral arm 630 may be disposed. The shape of the third rotation support portion 1430 of the second cam structure 660 may be formed to correspond to the shape of the second rotation portion 1350 of the first spiral arm 630. The third rotation support portion 1430 of the second cam structure 660 may support the second rotation portion 1350 of the first spiral arm 630, and with the second rotation portion 1350 of the first spiral arm 630 being disposed on the third rotation support portion 1430 of the second cam structure 660, the second rotation portion 1350 of the first spiral arm 630 may move.

In an embodiment of the disclosure, at least a part of the fourth rotation portion (not shown) of the second spiral arm 640 may be disposed on the fourth rotation support portion 1440 of the second cam structure 660. The shape of the fourth rotation support portion 1440 of the second cam structure 660 may be formed to correspond to the shape of the fourth rotation portion (not shown) of the second spiral arm 640. The fourth rotation support portion 1440 of the second cam structure 660 may support the fourth rotation portion (not shown) of the second spiral arm 640, and with the fourth rotation portion (not shown) of the second spiral arm 640 being disposed on the fourth rotation support portion 1440 of the second cam structure 660, the fourth rotation portion (not shown) of the second spiral arm 640 may move.

According to an embodiment of the disclosure, with the first rotation portion 1340 of the first spiral arm 630 being disposed on the first rotation support portion 1410 of the first cam structure 650 and the third rotation portion (not shown) of the second spiral arm 640 being disposed on the second rotation support portion 1420 of the first cam structure 650, the first spiral arm 630 and the second spiral arm 640 may rotate. As the first spiral arm 630 and the second spiral arm 640 rotate, the first cam structure 650 may move in the third direction (+y axis direction) parallel to the first rotation axis 920 and the second rotation axis 930. For example, as the first spiral arm 630 and the second spiral arm 640 rotate, the first spiral arm 630 and the second spiral arm 640 may push the first cam structure 650 in the third direction (+y axis direction) parallel to the first rotation axis 920 and the second rotation axis 930.

According to an embodiment of the disclosure, with the second rotation portion 1350 of the first spiral arm 630 being disposed on the third rotation support portion 1430 of the second cam structure 660 and the fourth rotation portion (not shown) of the second spiral arm 640 being disposed on the fourth rotation support portion 1440 of the second cam structure 660, the first spiral arm 630 and the second spiral arm 640 may rotate. As the first spiral arm 630 and the second spiral arm 640 rotate, the second cam structure 660 may move in the fourth direction (-y axis direction) parallel to the first rotation axis 920 and the second rotation axis 930. For example, as the first spiral arm 630 and the second spiral arm 640 rotate, the first spiral arm 630 and the second spiral arm 640 may push the second cam structure 660 in the fourth direction (-y axis direction) parallel to the first rotation axis 920 and the second rotation axis 930.

The operation of the first spiral arm 630 and the second spiral arm 640 moving the first cam structure 650 or the second cam structure 660 will be described in more detail with reference to FIGS. 27 to 29.

According to an embodiment of the disclosure, as the first spiral arm 630 and the second spiral arm 640 push the first cam structure 650 in the third direction (+y axis direction) parallel to the first rotation axis 920 or the second rotation axis 930, the first cam structure 650 may move via a fourth rail portion 1404, a fifth rail portion 1405, and a sixth rail portion 1406. For example, the fourth rail portion 1404 of the first cam structure 650 may be disposed or seated on the second rail portion 750 of the base member 600. For example, the fifth rail portion 1405 of the first cam structure 650 may be disposed or seated on the first seating portion 721 of the base member 600. For example, the sixth rail portion 1406 of the first cam structure 650 may be disposed or seated on the second seating portion 722 of the base member 600.

In an embodiment of the disclosure, the fourth rail portion 1404 of the first cam structure 650 may be disposed on the second rail portion 750 of the base member 600, the fifth rail portion 1405 of the first cam structure 650 may be disposed on the first seating portion 721 of the base member 600, and the sixth rail portion 1406 of the first cam structure 650 may be disposed on the second seating portion 722 of the base member 600, and in this state, the first cam structure 650 may move along the second rail portion 750, the first seating portion 721, and the second seating portion 722 of the base member.

According to an embodiment of the disclosure, as the first spiral arm 630 and the second spiral arm 640 push the second cam structure 660 in the fourth direction (-y axis direction) parallel to the first rotation axis 920 or the second rotation axis 930, the second cam structure 660 may move through a seventh rail portion 1407, an eighth rail portion 1408, and a ninth rail portion 1409. For example, the seventh rail portion 1407 of the second cam structure 660 may be disposed or seated on the third rail portion 760 of the base member 600. For example, the eighth rail portion 1408 of the second cam structure 660 may be disposed or seated on the third seating portion 723 of the base member 600. For example, the ninth rail portion 1409 of the second cam structure 660 may be disposed or seated on the fourth seating portion 724 of the base member 600.

In an embodiment of the disclosure, the seventh rail portion 1407 of the second cam structure 660 may be disposed on the third rail portion 760 of the base member 600, the eighth rail portion 1408 of the second cam structure 660 may be disposed on the third seating portion 724 of the base member 600, and the ninth rail portion 1409 of the second cam structure 660 may be disposed on the fourth seating portion 724 of the base member 600, and in this state, the second cam structure 660 may move along the third rail portion 760, the third seating portion 723, and the fourth seating portion 724 of the base member.

According to an embodiment of the disclosure, the first cam structure 660 may include at least one fifth protrusion 1450 and at least one sixth protrusion 1460. As the first cam structure 650 is moved in the third direction (+y axis direction) by the first spiral arm 630 and the second spiral arm 640, the at least one fifth protrusion 1450 may compress the at least one first elastic member 681 in the third direction (+y axis direction), and the at least one sixth protrusion 1460 may compress the at least one second elastic member 682 in the third direction (+y axis direction).

According to an embodiment of the disclosure, the second cam structure 660 may include at least one seventh protrusion 1470 and at least one eighth protrusion 1480. As the second cam structure 660 is moved in the fourth direction (-y axis direction) by the first spiral arm 630 and the second spiral arm 640, the at least one seventh protrusion 1470 may compress the at least one third elastic member 683 in the fourth direction (-y axis direction), and the at least one eighth protrusion 1480 may compress the at least one fourth elastic member 684 in the fourth direction (-y axis direction).

FIG. 27 is a view illustrating arrangements of the first spiral arm and the first cam structure in the unfolded state of the foldable electronic device according to an embodiment.

For convenience, only the first cam portion 1360 of the first spiral arm 630 and the first rotation support portion 1410 of the first cam structure 650 are described in FIGS. 27 to 29, but the descriptions may be equally applied to the second cam portion 1370 of the first spiral arm 630, the third cam portion (not shown) of the second spiral arm 640, and the fourth cam portion (not shown) of the second spiral arm 640.

According to an embodiment of the disclosure, the first cam portion 1360 of the first spiral arm 630 may include at least one convex portion. For example, the at least one convex portion of the first cam portion 1360 may include a second convex portion 1530.

According to an embodiment of the disclosure, the first rotation support portion 1410 of the first cam structure 650 may include at least one concave portion and at least one convex portion. For example, the at least one concave portion of the first rotation support portion 1410 may include a first concave portion 1500 and a second concave portion 1520. For example, the at least one convex portion of the first rotation support portion 1410 may include a first convex portion 1510.

According to an embodiment of the disclosure, for example, referring to FIG. 27, in the first state or the second state of the foldable electronic device 100, the second convex portion 1530 of the first cam portion 1360 may be positioned in the first concave portion 1500 of the first rotation support portion 1430.

According to an embodiment of the disclosure, as the second convex portion 1530 of the first cam portion 1360 is positioned in the first concave portion 1500 of the first rotation support portion 1430, the first spiral arm 630 may push the first cam structure 650 in the third direction (+y axis direction). When the second convex portion 1530 of the first cam portion 1360 is positioned in the first concave portion 1500 of the first rotation support portion 1430, the at least one fifth protrusion 1450 formed on the first cam structure 650 may compress the at least one first elastic member 681 disposed between the base member 600 and the at least one fifth protrusion 1450. The at least one first elastic member 681 compressed by the at least one fifth protrusion 1450 may have a first length.

In an embodiment of the disclosure, the at least one first elastic member 681 having the first length may apply a first elastic force to the first cam structure 650 in the fourth direction (-y axis direction). The first cam structure 650 may be subject to the first elastic force in the fourth direction (-y axis direction), and the first cam structure 650 subject to the force in the fourth direction may force the first spiral arm 630 toward the fourth direction.

In an embodiment of the disclosure, as the first spiral arm 630 rotates in the process of folding or unfolding the foldable electronic device 100, the position of the second convex portion 1530 of the first cam portion 1360 may be changed.

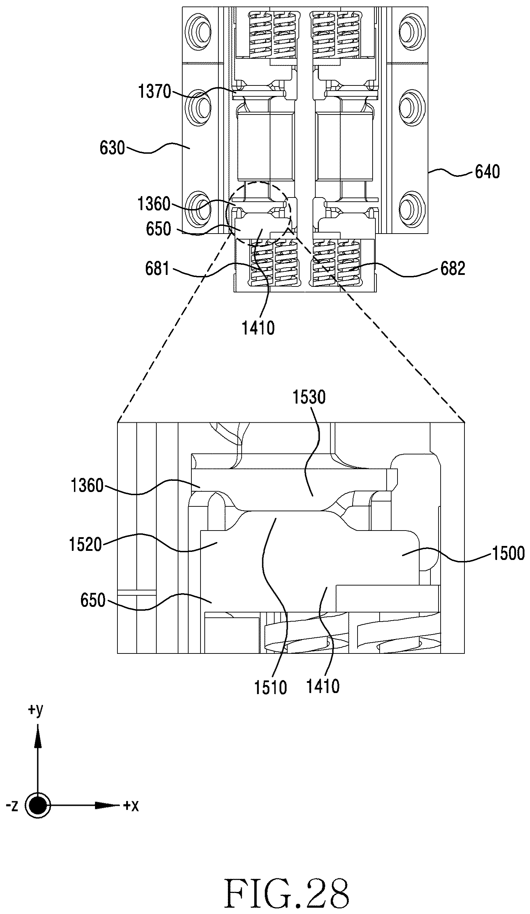

FIG. 28 is a view illustrating an example of arrangements of the first spiral arm and the first cam structure while the foldable electronic device is being folded according to one embodiment.

According to an embodiment of the disclosure, referring to FIG. 28, in the process in which the state of the foldable electronic device 100 changes from the first state or the second state to the third state, the second convex portion 1530 of the first cam portion 1360 of the foldable electronic device 100 may come into contact with the first convex portion 1510 of the first rotation support portion 1430.

According to an embodiment of the disclosure, the first spiral arm 630 may exert a greater force on the first cam structure 650 in the third direction (+y axis direction) when the second convex portion 1530 of the first cam portion 1360 comes into contact with the first convex portion 1510 of the first rotation support portion 1430 than when the second convex portion 1530 of the first cam portion 1360 is positioned in the first concave portion 1500 of the first rotation support portion 1430.

In an embodiment of the disclosure, when the second convex portion 1530 of the first cam portion 1360 comes into contact with the first convex portion 1510 of the first rotation support portion 1430, the at least one fifth protrusion 1450 formed on the first cam structure 650 may further compress the at least one first elastic member 681 disposed between the base member 600 and the at least one fifth protrusion 1450 than when the second convex portion 1530 of the first cam portion 1360 is positioned in the first concave portion 1500 of the first rotation support portion 1430. The first elastic member 681 compressed by the at least one fifth protrusion 1350 may have a second length shorter than the first length.

In an embodiment of the disclosure, the at least one first elastic member 681 having the second length may exert a second elastic force greater than the first elastic force on the first cam structure 650 in the fourth direction (-y axis direction). Due to the second elastic force, the first cam structure 650 may be subject to a greater force than the first elastic force in the fourth direction (-y axis direction), and the first cam structure 650 which is subject to a greater force in the fourth direction may exert a stronger force on the first spiral arm 630 toward the fourth direction.

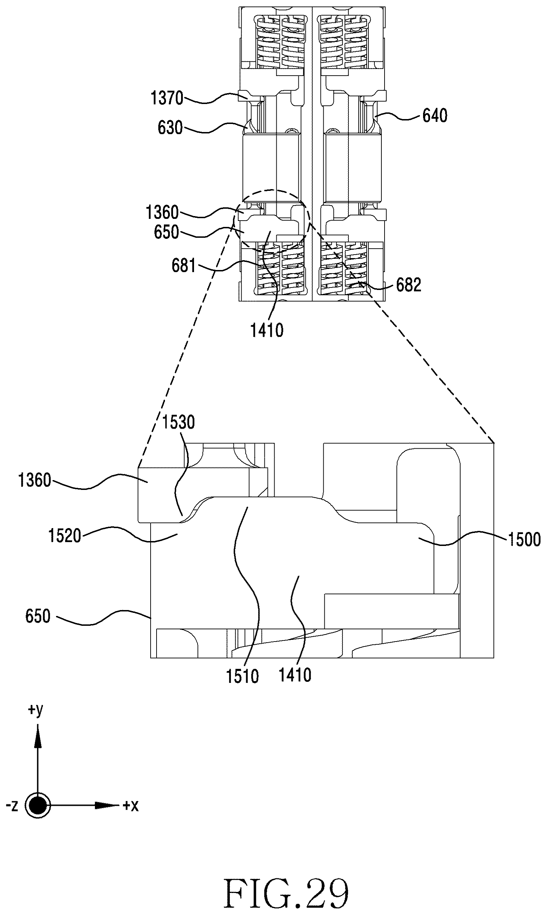

FIG. 29 is a view illustrating arrangements of the first spiral arm and the first cam structure in the folded state of the foldable electronic device according to an embodiment.

According to an embodiment of the disclosure, referring to FIG. 28, in the third state of the foldable electronic device 100, the second convex portion 1530 of the first cam portion 1360 may be positioned in the second concave portion 1520 of the first rotation support portion 1430.

According to an embodiment of the disclosure, in the third state of the foldable electronic device 100, the first spiral arm 630 may exert a greater force on the first cam structure 650 in the third direction (+y axis direction) when the second convex portion 1530 of the first cam portion 1360 is positioned in the second concave portion 1520 of the first rotation support portion 1430 than when the second convex portion 1530 of the first cam portion 1360 is positioned in the first concave portion 1500 of the first rotation support portion 1430. In the third state of the foldable electronic device 100, the first spiral arm 630 may exert a weaker force on the first cam structure 650 in the third direction (+y axis direction) when the second convex portion 1530 of the first cam portion 1360 is positioned in the second concave portion 1520 of the first rotation support portion 1430 than when the second convex portion 1530 of the first cam portion 1360 comes into contact with the first convex portion 1510 of the first rotation support portion 1430.

When the second convex portion 1530 of the first cam portion 1360 is positioned in the second concave portion 1520 of the first rotation support portion 1430, the at least one fifth protrusion 1450 formed on the first cam structure 650 may compress the at least one first elastic member 681 disposed between the base member 600 and the at least one fifth protrusion 1450. The at least one first elastic member 681 compressed by the at least one fifth protrusion 1450 may have a third length that is shorter than the first length and longer than the second length.

In an embodiment of the disclosure, the at least one first elastic member 681 having the third length may exert a third elastic force that is greater than the first elastic force and less than the second elastic force on the first cam structure 650 in the fourth direction (-y axis direction). Due to the third elastic force, the first cam structure 650 may be subject to a force in the fourth direction (-y axis direction) that is greater than when the foldable electronic device 100 is in the first state or the second state and is less than when the foldable electronic device 100 changes from the first state or the second state to the third state.

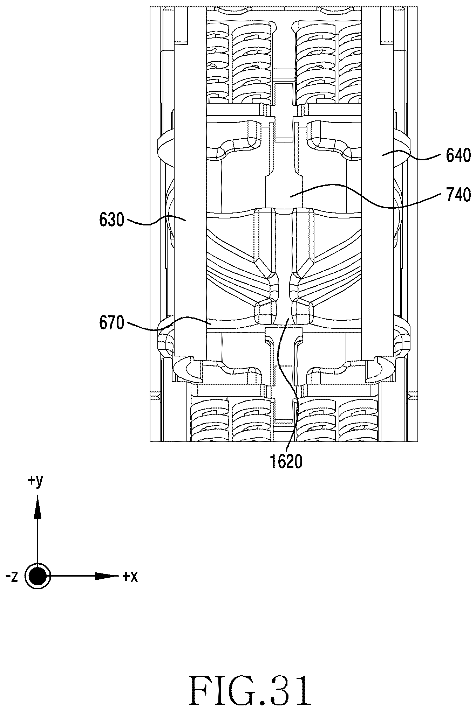

FIG. 30 is a perspective view of the slider member according to an embodiment. FIG. 31 is a view illustrating movement of the slider member according to an embodiment.

In an embodiment of the disclosure, the slider member 670 may include a first rotation guide portion 1600, a second rotation guide portion 1610, a first receiving portion 1620, and a fifth seating portion 1630. The first rotation guide portion 1600, the second rotation guide portion 1610, and the fifth seating portion 1630 may be formed on a front surface of the slider member 670 that faces the first direction (+z axis direction). The first receiving portion 1620 may be formed on a rear surface of the slider member 670 that faces the second direction (-z axis direction).

In an embodiment of the disclosure, the first rotation protrusion 1380 of the first spiral arm 630 may be disposed or seated on the first rotation guide portion 1600 of the slider member 670. The first rotation guide portion 1600 of the slider member 670 may be formed to correspond to the shape of the first rotation protrusion 1380 of the first spiral arm 630. For example, the first rotation guide portion 1600 may be formed in a spiral shape to correspond to the spiral shape of the first rotation protrusion 1380.

In an embodiment of the disclosure, the second rotation protrusion (not shown) of the second spiral arm 640 may be disposed or seated on the second rotation guide portion 1610 of the slider member 670. The second rotation guide portion 1610 of the slider member 670 may be formed to correspond to the shape of the second rotation protrusion (not shown) of the second spiral arm 640. For example, the second rotation guide portion 1610 may be formed in a spiral shape to correspond to the spiral shape of the second rotation protrusion (not shown).

In an embodiment of the disclosure, the slider member 670 may include the first receiving portion 1620 corresponding to the first rail portion 740 of the base member 600. With the first rail portion 740 of the base member 600 being disposed in the first receiving portion 1620 of the slider member 670, the slider member 670 may move along the first rail portion 740 of the base member 600, such that the slider member 670 may move in the direction parallel with the first rotation axis 920 of the first spiral arm 630 and the second rotation axis 930 of the second spiral arm 640.

According to an embodiment of the disclosure, with the first rotation protrusion 1380 of the first spiral arm 630 being disposed on the first rotation guide portion 1600 and the second rotation protrusion (not shown) of the second spiral arm 640 being disposed on the second rotation guide portion 1610, the first spiral arm 630 and the second spiral arm 640 may rotate, such that the slider member 670 may move along the first rail portion 740 of the base member 600.

In an embodiment of the disclosure, as the first spiral arm 630 and the second spiral arm 640 rotate, the first rotation protrusion 1380 may move within the first rotation guide portion 1600 of the slider member 670. For example, the first rotation protrusion 1380 may come into contact with the first rotation guide portion 1600 of the slider member 670 in a spiral direction along the first rotation guide portion 1600 of the slider member 670.

In an embodiment of the disclosure, the second rotation protrusion (not shown) may move within the second rotation guide portion 1610 of the slider member 670. For example, the second rotation protrusion (not shown) may come into contact with the second rotation guide portion 1610 of the slider member 670 in a spiral direction along the second rotation guide portion 1610 of the slider member 670.

In an embodiment of the disclosure, as the first rotation protrusion 1340 moves in the spiral direction along the first rotation guide portion 1600 and the second rotation protrusion (not shown) moves in the spiral direction along the second rotation guide portion 1610, the slider member 670 may move along the first rail portion 740 of the base member 600.

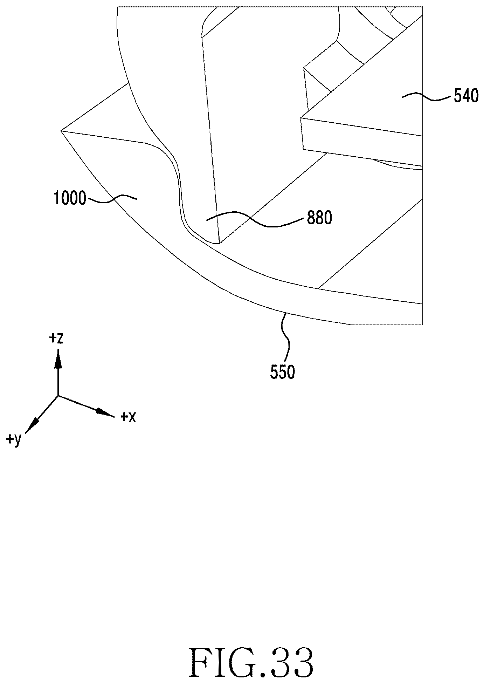

FIG. 32 is a perspective view illustrating a stopper structure of the hinge housing according to an embodiment. FIG. 33 is a view illustrating a structure in which the first locking portion of the first rotation arm is supported by the first stopper of the hinge housing according to one embodiment.

In an embodiment of the disclosure, referring to FIG. 32, the hinge housing 550 may include the first stopper 1000 and the second stopper 1010. For example, the first stopper 1000 may be formed on one side of the hinge housing 550. For example, the second stopper 1010 may be formed on the other side of the hinge housing 550. The first stopper 1000 may protrude from one side of the hinge housing 550 in a direction (+x axis direction) that is perpendicular to the first rotation axis 920 of the first rotation arm 610 or the second rotation axis 930 of the second rotation arm 620. The second stopper 1010 may protrude from the other side of the hinge housing 550 in a direction (-x axis direction) that is perpendicular to the first rotation axis 920 of the first rotation arm 610 or the second rotation axis 930 of the second rotation arm 620.

In an embodiment of the disclosure, referring to FIG. 33, the first rotation arm 610 may include the first locking portion 880. For example, the first locking portion 880 may be formed on at least a part of the third portion 830 of the first rotation arm 610. For example, the first locking portion 880 of the first rotation arm 610 may be formed between the first slide groove portion 860 and the second slide groove portion 870 of the first rotation arm 610. The first locking portion 880 may include a contact surface that may contact the first stopper 1000 of the hinge housing 550.

In an embodiment of the disclosure, the second rotation arm 620 may include the second locking portion 890. For example, the second locking portion 890 may be formed on at least a part of the third portion (not shown) of the second rotation arm 620. For example, the second locking portion 890 of the second rotation arm 620 may be formed between the third slide groove portion 885 and the fourth slide groove portion (not shown) of the second rotation arm 620. The second locking portion 890 may include a contact surface that may contact the second stopper 1010 of the hinge housing 550.

In an embodiment of the disclosure, in the third state of the foldable electronic device 100, the first locking portion 880 of the first rotation arm 610 may contact the first stopper 1000 of the hinge housing 550. In the third state of the foldable electronic device 100, the first locking portion 880 of the first rotation arm 610 may contact with the first stopper 1000 of the hinge housing 550, such that the first stopper 1000 may prevent the second housing 120 connected with the first rotation arm 610 from rotating by a predetermined angle or more. For example, the predetermined angle may be an angle at which, in the third state of the foldable electronic device 100, the first rotation arm 610 does not disengage from the base member 600.

In an embodiment of the disclosure, in the third state of the foldable electronic device 100, the second locking portion 890 of the second rotation arm 620 may contact the second stopper 1010 of the hinge housing 550. In the third state of the foldable electronic device 100, the second locking portion 890 of the second rotation arm 620 may contact the second stopper 1010 of the hinge housing 550, such that the second stopper 1010 may prevent the third housing 130 connected with the second rotation arm 620 from rotating by a predetermined angle or more. For example, the predetermined angle may be an angle at which, in the third state of the foldable electronic device 100, the second rotation arm 620 does not disengage from the base member 600.

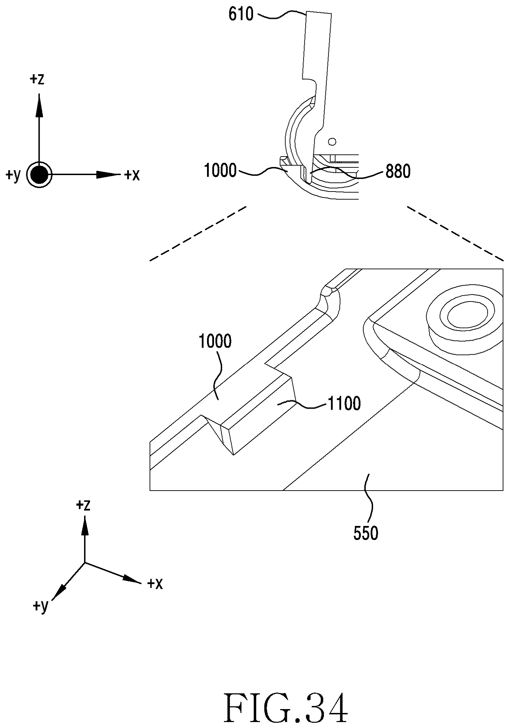

FIG. 34 is a view illustrating the first stopper structure including an elastic member according to an embodiment.

In an embodiment of the disclosure, the first stopper 1000 of the hinge housing 550 may include a fifth elastic member 1100. For example, the fifth elastic member 1100 may be formed on one side of the first stopper 1000. In the third state of the foldable electronic device 100, the first locking portion 880 of the first rotation arm 610 may contact the fifth elastic member 1100 of the first stopper 1000. In the third state of the foldable electronic device 100, when the first locking portion 880 of the first rotation arm 610 comes into contact with the fifth elastic member 1100 of the first stopper 1000, the fifth elastic member 1100 may exert a repulsive force on the first rotation arm 610. The fifth elastic member 1100 may exert the repulsive force on the first rotation arm 610 before the second housing 120 connected to the first rotation arm 610 is rotated by a predetermined angle or more, thereby mitigating the impact that the first rotation arm 610 exerts on the hinge housing 550.

In an embodiment of the disclosure, the second stopper 1010 of the hinge housing 550 may include a sixth elastic member (not shown). For example, the sixth elastic member (not shown) may be formed on one side of the second stopper 1010. In the third state of the foldable electronic device 100, the second locking portion 890 of the second rotation arm 620 may contact the sixth elastic member (not shown) of the second stopper 1010. In the third state of the foldable electronic device 100, when the second locking portion 890 of the second rotation arm 620 comes into contact with the sixth elastic member (not shown) of the second stopper 1010, the sixth elastic member (not shown) may exert a repulsive force on the second rotation arm 620. The sixth elastic member (not shown) may exert the repulsive force on the second rotation arm 620 before the third housing 130 connected to the second rotation arm 620 is rotated by a predetermined angle or more, thereby mitigating the impact that the second rotation arm 620 exerts on the hinge housing 550.

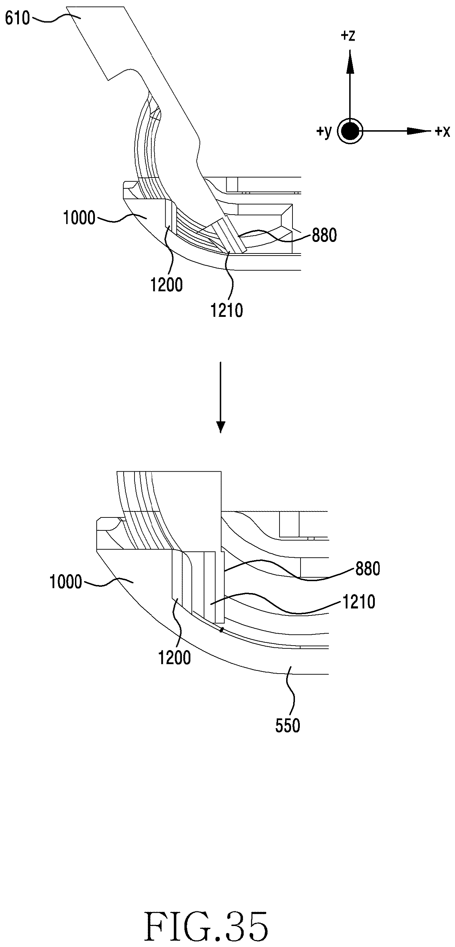

FIG. 35 is a view illustrating the first stopper structure including a magnetic substance according to an embodiment.

In an embodiment of the disclosure, the first stopper 1000 of the hinge housing 550 may include a first magnetic substance 1200. For example, the first magnetic substance 1200 may be disposed on one side of the first stopper 1000. The first locking portion 880 of the first rotation arm 610 may include a second magnetic substance 1210. For example, the second magnetic substance 1210 may be disposed on a contact surface of the first locking portion 880 that contacts the first stopper 1000. In the third state of the foldable electronic device 100, the first stopper 1000 of the hinge housing 550 and the first locking portion 880 of the first rotation arm 610 may get closer to each other. As the first stopper 1000 of the hinge housing 550 and the first locking portion 880 of the first rotation arm 610 get closer to each other, the first magnetic substance 1200 of the first stopper 1000 and the second magnetic substance 1210 of the first locking portion 880 may get closer to each other.

In an embodiment of the disclosure, the first magnetic substance 1200 of the first stopper 1000 and the second magnetic substance 1210 of the first locking portion 880 may be formed with the same poles. In the third state of the foldable electronic device 100, the first magnetic substance 1200 and the second magnetic substance 1210 may get closer to each other, such that a repulsive force may be generated between the first magnetic substance 1200 and the second magnetic substance 1210. For example, the repulsive force may be generated between the first magnetic substance 1200 and the second magnetic substance 1210, thereby mitigating the impact that the first rotation arm 610 exerts on the hinge housing 550.

In an embodiment of the disclosure, the first magnetic substance 1200 of the first stopper 1000 and the second magnetic substance 1210 of the first locking portion 880 may be formed with different poles. In the third state of the foldable electronic device 100, the first magnetic substance 1200 and the second magnetic substance 1210 may get closer to each other, such that an attractive force may be generated between the first magnetic substance 1200 and the second magnetic substance 1210. For example, the attractive force may be generated between the first magnetic substance 1200 and the second magnetic substance 1210, such that the third state of the foldable electronic device 100 is stably maintained.

The magnetic substances of FIG. 35 are not limited to the first stopper 1000 and the first locking portion 880, but may also be applied to the second stopper 1010 and the second locking portion 890.

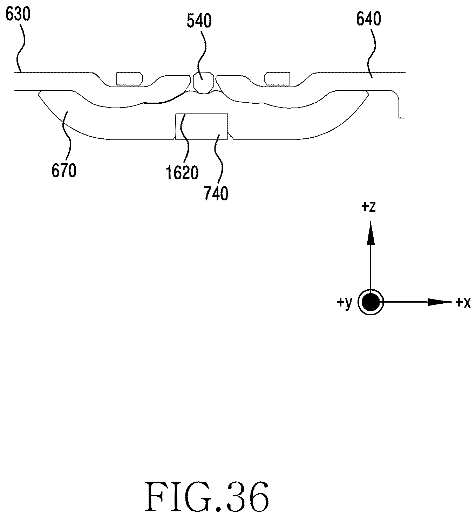

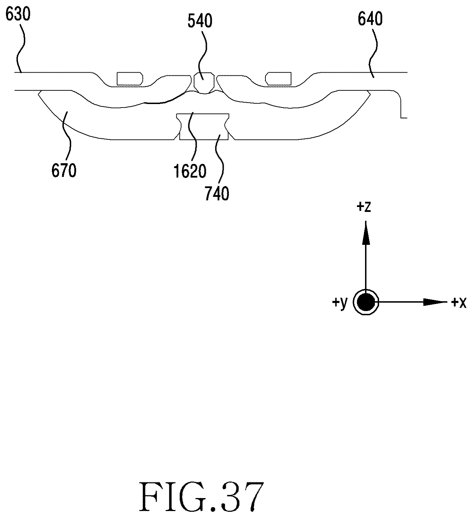

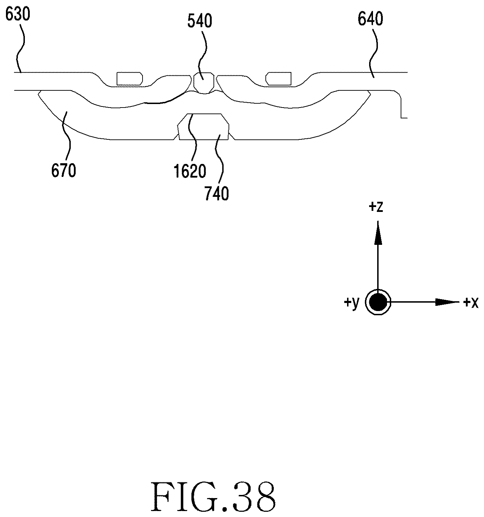

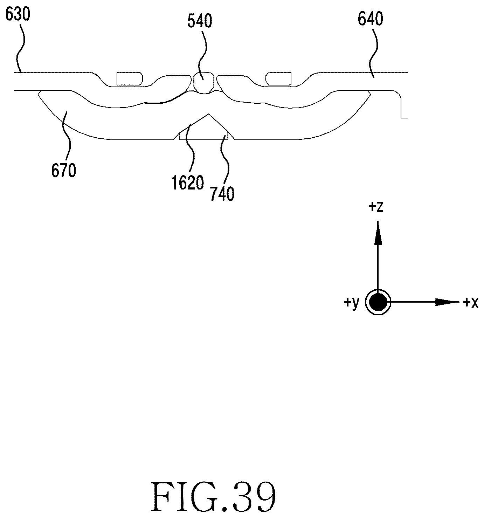

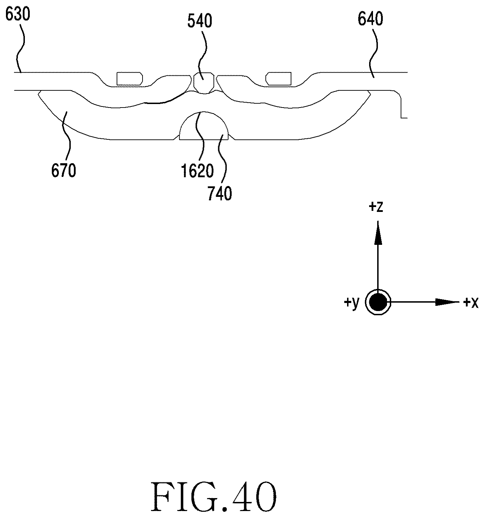

FIG. 36 is a cross-sectional view of a sections E-E' of the first hinge assembly of FIG. 11 according to an embodiment. FIGS. 37 to 40 are views illustrating an example of a shape of a cross section of the first rail portion of the base member according to an embodiment.

In an embodiment of the disclosure, the slider member 670 may include the first receiving portion 1620. The first receiving portion 1620 of the slider member 670 may be formed to correspond to the shape of the first rail portion 740 of the base member 600. The first rail portion 740 of the base member 600 may be disposed in the first receiving portion 1620 of the slider member 670. The slider member 670 may move along the first rail portion 740 of the base member 600 disposed within the first receiving portion 1620 of the slider member 670. The slider member 670 may move along the first rail portion 740 of the base member 600 disposed in the first receiving portion 1620 of the slider member 670 in the direction parallel to the first rotation axis 920 and the second rotation axis 930.

According to an embodiment of the disclosure, referring to FIGS. 37 to 40, the cross-sectional shape of the first rail portion 740 of the base member 600 may be at least one of a square, trapezoidal, triangular, or circular shape. The shape of the first receiving portion 1620 of the slider member 670, in which the first rail portion 740 of the base member 600 is disposed or seated, may be formed to correspond to the shape of the cross-section of the first rail portion 740 of the base member 600.

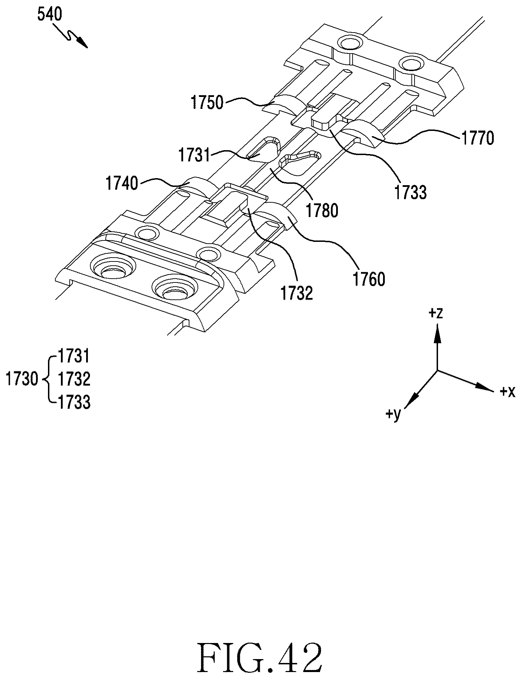

FIG. 41 is a front view illustrating a front surface of the support plate according to an embodiment. FIG. 42 is a rear view illustrating a rear surface of the support plate according to an embodiment.

According to an embodiment of the disclosure, referring to FIG. 41, at least a part of the support plate 540 may be connected with the base member 600. The support plate 540 may include at least one fifth opening 1700. For example, the support plate 540 may be connected with the hinge housing 550 through the at least one fifth opening 1700. For example, the support plate 540 may be connected with the hinge housing 550 through a fastening mechanism disposed to penetrate through the at least one fifth opening 1700 of the support plate 540 and at least a part of the hinge housing 550.

Another part of the support plate 54 may be connected with the hinge housing 550. The support plate 540 may include at least one sixth opening 1710. For example, the support plate 540 may be connected with the base member 600 through the at least one sixth opening 1710. For example, the support plate 540 may be connected with the base member 600 through a fastening mechanism disposed to penetrate through the at least one sixth opening 1710 of the support plate 540 and a at least one seventh opening 1720 of the base member 600.

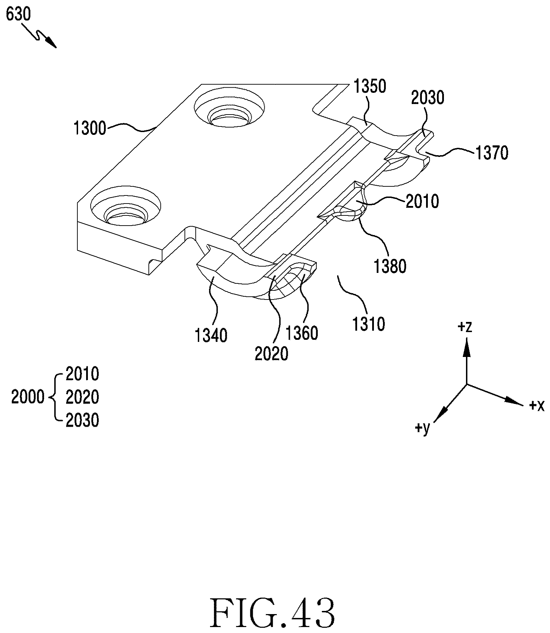

According to an embodiment, referring to FIG. 42, the support plate 540 may include a plurality of groove portions 1730. The plurality of groove portions 1730 may include a first groove portion 1731, a second groove portion 1732, and a third groove portion 1733. A plurality of extension portions 2000 of the first spiral arm 630 and second spiral arm 640 may be inserted into the first groove portion 1731, the second groove portion 1732, and the third groove portion 1733 of the support plate 540, respectively. The plurality of extension portions 2000 of the first spiral arm 630 and the second spiral arm 640, which will be described later, may be inserted into the plurality of groove portions 1730 as the first spiral arm 630 and second spiral arm 640 rotate. The structure in which the plurality of extension portions 2000 of the first spiral arm 630 and the second spiral arm 640 are inserted into the plurality of groove portions 1730 will be described in more detail with reference to FIGS. 43 to 44.

According to an embodiment, referring to FIG. 42, the rear surface of the support plate 540 may include a tenth rail portion 1740, an eleventh rail portion 1750, a twelfth rail portion 1760, a thirteenth rail portion 1770, and a fourteenth rail portion 1780. For example, the rear surface of the support plate 540 may be a surface that faces the second direction (-z axis direction). For example, the rear surface of the support plate 540 may be a surface that faces the base member 600.

According to an embodiment of the disclosure, the first spiral arm 630 may rotate along the tenth rail portion 1740 and the eleventh rail portion 1750 of the support plate 540. For example, the tenth rail portion 1740 of the support plate 540 may be formed to correspond to the shape of the first rotation portion 1340 of the first spiral arm 630. For example, the eleventh rail portion 1750 of the support plate 540 may be formed to correspond to the shape of the second rotation portion 1350 of the first spiral arm 630. As the first rotation portion 1340 of the first spiral arm 630 moves along the tenth rail portion 1740 of the support plate 540 and the second rotation portion 1350 of the first spiral arm 630 moves along the eleventh rail portion 1750 of the support plate 540, the first spiral arm 630 may rotate.

According to an embodiment of the disclosure, the second spiral arm 640 may rotate along the twelfth rail portion 1760 and the thirteenth rail portion 1770 of the support plate 540. For example, the twelfth rail portion 1760 of the support plate 540 may be formed to correspond to the shape of the third rotation portion (not shown) of the second spiral arm 640. For example, the thirteenth rail portion 1770 of the support plate 540 may be formed to correspond to the shape of the fourth rotation portion (not shown) of the second spiral arm 640. As the third rotation portion (not shown) of the second spiral arm 640 moves along the twelfth rail portion 1760 of the support plate 540 and the fourth rotation portion (not shown) of the second spiral arm 640 moves along the thirteenth rail portion 1770 of the support plate 540, the second spiral arm 640 may rotate.

According to an embodiment of the disclosure, the fourteenth rail portion 1780 of the support plate 540 may be formed in parallel with the first rotation axis 920 of the first spiral arm 630 and the second rotation axis 930 of the second spiral arm 640. The fourteenth rail portion 1780 of the support plate 540 may be formed to correspond to the shape of the fifth seating portion 1630 of the slider member 670. For example, the slider member 670 may move along the fourteenth rail portion 1780 of the support plate 540 in parallel with the first rotation axis 920 and the second rotation axis 930. For example, with the fourteenth rail portion 1780 of the support plate 540 being disposed or seated on the fifth seating portion 1630 of the slider member 670, the slider member 670 may move in parallel with the first rotation axis 920 and the second rotation axis 930.

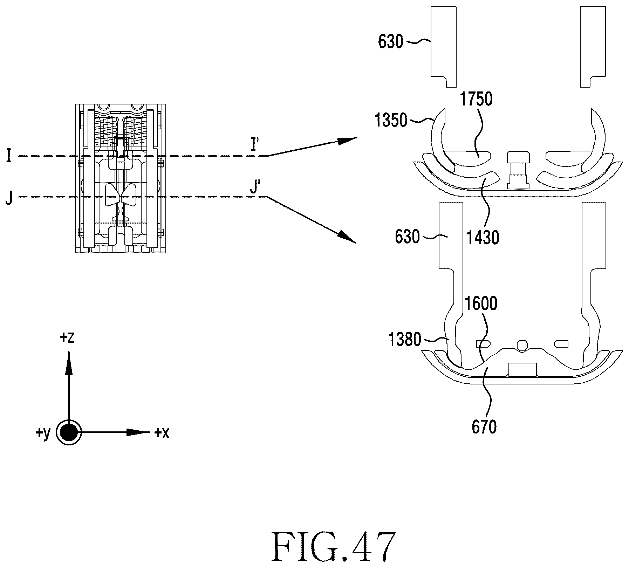

The operation of the first rotation portion 1340 and the second rotation portion 1350 of the first spiral arm 630 rotating along the tenth rail portion 1740 and the eleventh rail portion 1750 of the support plate 540 will be described in more detail in FIGS. 47 to 49.

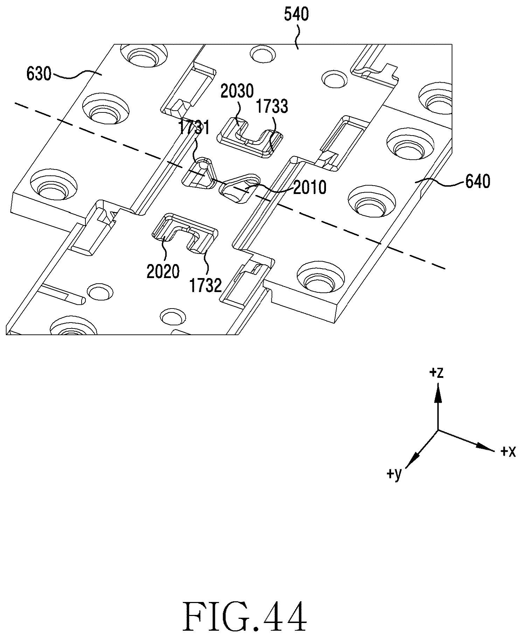

FIG. 43 is a view illustrating extension portions of the first spiral arm which are inserted into the plurality of groove portions of the support plate according to an embodiment. FIG. 44 is a view illustrating an example of a state in which the extension portions of the first spiral arm are inserted into the plurality of groove portions of the support plate according to an embodiment.

In FIGS. 43 and 44, only the extension portions of the first spiral arm 630 are illustrated, but the second spiral arm 640 may also include extension portions, and the extension portions of the second spiral arm 640 may also be inserted into the plurality of groove portions 1730 of the support plate 540.

According to an embodiment of the disclosure, the first rotation protrusion 1380 of the first spiral arm 630 may include a first extension portion 2010 that may be inserted into the first groove portion 1731 of the support plate 540. The first rotation portion 1340 of the first spiral arm 630 may include a second extension portion 2020 that may be inserted into the second groove portion 1732 of the support plate 540. The second rotation portion 1350 of the first spiral arm 630 may include a third extension portion 2030 that may be inserted into the third groove portion 1733 of the support plate 540.

According to an embodiment of the disclosure, referring to FIG. 43, the first extension portion 2010 of the first rotation protrusion 1380 may be a portion that extends from one end of the first rotation protrusion 1380. For example, the first extension portion 2010 may be a portion of one end of the first rotation protrusion 1380 that extends to face the first direction (+z axis direction). For example, the first extension portion 2010 may be a portion of one end of the first rotation protrusion 1380 that extends from the first rotation protrusion 1380 with a designated curvature.

According to an embodiment, referring to FIG. 43, the second extension 2020 of the first rotation portion 1340 may be a portion that extends from one end of the first rotation portion 1340. For example, the second extension portion 2020 may be a portion of one end of the first rotation portion 1340 that extends to face the first direction (+z axis direction). For example, the second extension portion 2020 may be a portion of one end of the first rotation portion 1340 that extends from the first rotation portion 1340 with a designated curvature.

According to an embodiment, referring to FIG. 43, the third extension portion 2030 of the second rotation portion 1350 may be a portion that extends from one end of the second rotation portion 1350. For example, the third extension portion 2030 may be a portion of one end of the second rotation portion 1350 that extends to face the first direction (+z axis direction). For example, the third extension portion 2030 may be a portion of one end of the second rotation portion 1350 that extends from the second rotation portion 1350 with a designated curvature.

According to an embodiment of the disclosure, referring to FIG. 44, as the first spiral arm 630 rotates, the first extension portion 2010 of the first rotation protrusion 1380 may be inserted into the first groove portion 1731 of the support plate 540. For example, as the foldable electronic device 100 changes from the first state to the second state or the third state in which the second housing 120 and third housing 130 of the foldable electronic device 100 are unfolded, the first extension portion 2010 of the first rotation protrusion 1380 may be inserted into the first groove portion 1731 of the support plate 540.

According to an embodiment of the disclosure, referring to FIG. 44, the second extension portion 2020 of the first rotation portion 1340 may be inserted into the second groove portion 1732 of the support plate 540. For example, as the foldable electronic device 100 changes from the first state to the second state or the third state in which the second housing 120 and third housing 130 of the foldable electronic device 100 are unfolded, the second extension portion 2020 of the first rotation portion 1340 may be inserted into the second groove portion 1732 of the support plate 540.

According to an embodiment, referring to FIG. 44, the third extension portion 2030 of the second rotation portion 1350 may be inserted into the third groove portion 1733 of the support plate 540. For example, as the foldable electronic device 100 changes from the first state to the second state or the third state in which the second housing 120 and the third housing 130 of the foldable electronic device 100 are unfolded, the third extension portion 2030 of the second rotation portion 1350 may be inserted into the third groove portion 1733 of the support plate 540.

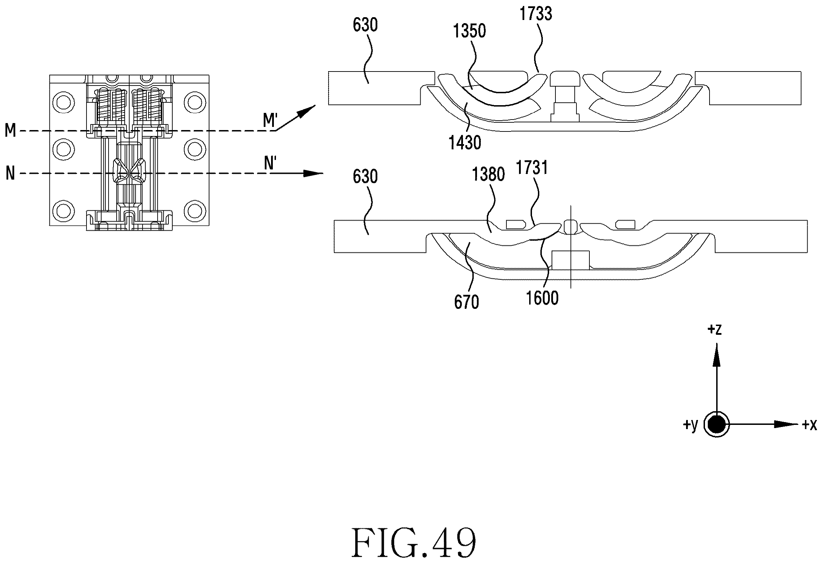

An example of the plurality of extension portions 2000 being inserted into the plurality of groove portions 1730 as the state of the foldable electronic device 100 changes will be described in more detail in FIG. 49.

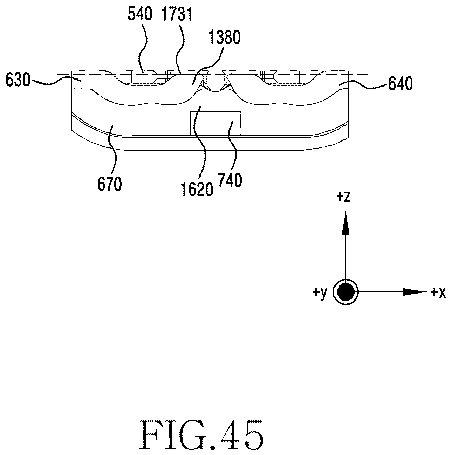

FIG. 45 is a cross-sectional view of a cross-section F-F' of the first hinge assembly of FIG. 44 according to an embodiment. The cross-section F-F' may be a cross-section of at least a part of the support plate 540 and the first hinge assembly 510 in the second or third state in which the second housing 120 and the third housing 130 of the foldable electronic device 100 are unfolded.

According to an embodiment of the disclosure, referring to FIG. 45, in the second state or third state of the foldable electronic device 100, the first extension portion 2010 of the first rotation protrusion 1380 may be disposed in the first groove portion 1731 of the support plate 540. For example, in the second state or third state of the foldable electronic device 100, one end of the first extension portion 2010 may be disposed within the first groove portion 1731 of the support plate 540. For example, in the second or third state of the foldable electronic device 100, one end of the first extension portion 2010 may be disposed between one side of the first groove portion 1731 that faces the first direction (+z axis direction) and the other side that faces the second direction (-z axis direction). For example, in the second state or third state of the foldable electronic device 100, the first extension portion 2010 may be disposed such that one end of the first extension portion 2010 does not protrude further in the first direction than one side of the first groove portion 1731.

In FIG. 45, only the first extension portion 2010 is described, but the same descriptions may be equally applied to the second extension portion 2020 and the third extension portion 2030.

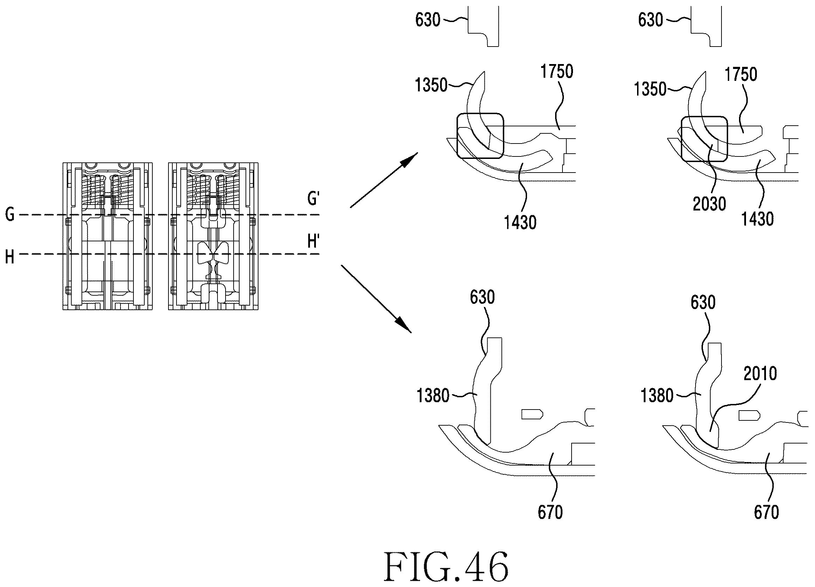

FIG. 46 is a view illustrating a cross-section G-G' and a cross-section H-H' of an extension portion of the first spiral arm that is inserted into at least one groove portion of the support plate according to one embodiment.

According to an embodiment of the disclosure, FIG. 46 is a cross-sectional view of a part of the first hinge assembly 510 when the support plate 540 of the foldable electronic device 100 includes the plurality of extension portions 2000 and when the support plate 540 of the foldable electronic device 100 does not include the plurality of extension portions 2000.

According to an embodiment of the disclosure, referring to the cross-section G-G' of FIG. 466, the second rotation portion 1350 of the first spiral arm 630 may include the third extension portion 2030 that may be inserted into the third groove portion 1733 of the support plate 540. For example, in the third state of the foldable electronic device 100, the third extension portion 2030 of the second rotation portion 1350 may contact the eleventh rail portion 1750 of the support plate 540 and the third rotation support portion 1430 of the second cam structure 660. Due to the third extension portion 2030, the area over which the first spiral arm 630 contacts the eleventh rail portion 1750 of the support plate 540 and the third rotation support portion 1430 of the second cam structure 660 may increase. As the area where the first spiral arm 630 contacts the eleventh rail portion 1750 of the support plate 540 and the third rotation support portion 1430 of the second cam structure 660 increases, the foldable electronic device 100 may stably maintain the third state.

According to an embodiment of the disclosure, referring to the cross-sections H-H' of FIG. 46, the first rotation protrusion 1380 of the first spiral arm 630 may include the first extension portion 2010 that may be inserted into the first groove portion 1731 of the support plate 540. For example, in the third state of the foldable electronic device 100, the first extension portion 2010 of the first rotation protrusion 1380 may contact the first rotation guide portion 1600 of the slider member 670. Due to the first extension portion 2010, the area over which the first spiral arm 630 contacts the slider member 670 may increase. As the area where the first spiral arm 630 contacts the slider member 670 increases, the foldable electronic device 100 may stably maintain the third state.

FIG. 47 is a view illustrating a cross-section I-I' and a cross-section J-J' of the first hinge assembly in the folded state of the foldable electronic device according to an embodiment.

According to an embodiment of the disclosure, referring to the cross-sections I-I' of FIG. 47, in the third state of the foldable electronic device 100, at least a part of the second rotation portion 1350 of the first spiral arm 630 may be disposed between the eleventh rail portion 1750 of the support plate 540 and the third rotation support portion 1430 of the second cam structure 660. For example, the third extension portion 2030 of the second rotation portion 1350 may be disposed between the eleventh rail portion 1750 and the third rotation support portion 1430. In the third state of the foldable electronic device 100, at least a part of the second rotation portion 1350 of the first spiral arm 630 may be disposed between the support plate 540 and the second cam structure 660, such that the first spiral arm 630 does not disengage from the second hinge structure 150.

According to an embodiment of the disclosure, referring to the cross-sections J-J' of FIG. 47, in the third state of the foldable electronic device 100, at least a part of the first rotation protrusion 1380 of the first spiral arm 630 may contact the first rotation guide portion 1600 of the slider member 670. For example, the first extension portion 2010 of the first rotation protrusion 1380 may contact the first rotation guide portion 1600. In the third state of the foldable electronic device 100, at least a part of the first rotation protrusion 1380 of the first spiral arm 630 may contact the first rotation guide portion 1600 of the slider member 670, such that the second hinge structure 150 may stably maintain the third state of the foldable electronic device 100.

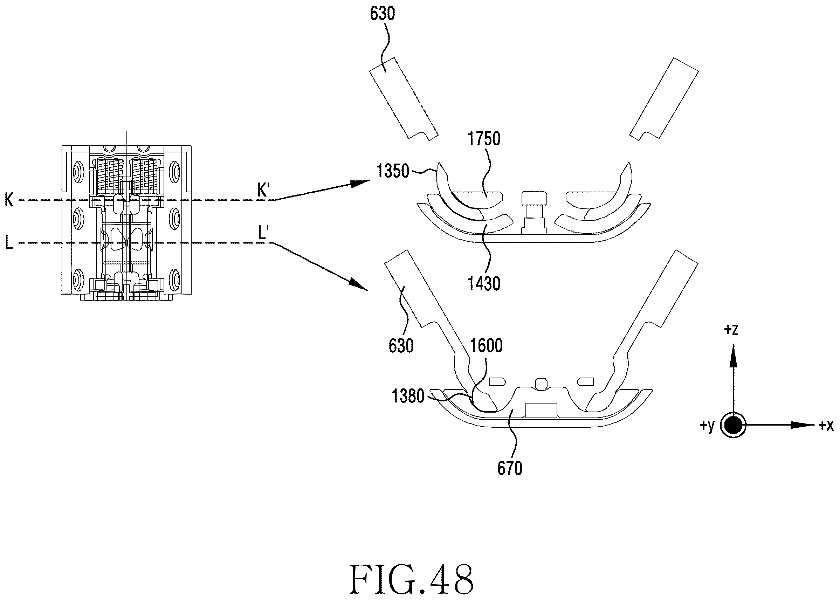

FIG. 48 is a view illustrating a cross-section K-K' and a cross-section L-L' of the first hinge assembly in one example during a folding operation of the foldable electronic device according to an embodiment.

According to an embodiment of the disclosure, referring to the cross-section K-K' of FIG. 48, while the state of the foldable electronic device changes from the third state to the second state, the second rotation portion 1350 of the first spiral arm 630 may move along the eleventh rail portion 1750 of the support plate 540 and the third rotation support portion 1430 of the first cam structure 650. For example, one side of the second rotation portion 1350 that faces the first direction (+z axis direction) may move along the eleventh rail portion 1750. For example, the other side of the second rotation portion 1350 that faces the second direction (-z axis direction) may move along the third rotation support portion 1430.

According to an embodiment of the disclosure, the eleventh rail portion 1750 and the third rotation support portion 1430 may guide movement of the second rotation portion 1350 of the first spiral arm 630. As the eleventh rail portion 1750 and the third rotation support portion 1430 guide movement of the second rotation portion 1350 of the first spiral arm 630, the first spiral arm 630 may rotate stably.

According to an embodiment of the disclosure, referring to the cross-section L-L' of FIG. 48, while the state of the foldable electronic device changes from the third state to the second state, at least a part of the first rotation protrusion 1380 of the first spiral arm 630 may move in contact with the first rotation guide portion 1600 of the slider member 670. For example, with at least a part of the first rotation protrusion 1380 contacting the first rotation guide portion 1600, the first rotation protrusion 1380 may move in a spiral direction.

FIG. 49 is a view illustrating a cross-section M-M' and a cross-section N-N' of the first hinge assembly in the unfolded state of the foldable electronic device according to an embodiment.

According to an embodiment of the disclosure, referring to the cross-section M-M' of FIG. 49, in the first or second state of the foldable electronic device 100, at least a part of the second rotation portion 1350 of the first spiral arm 630 may be inserted into the third groove portion 1733 of the support plate 540. For example, the third extension portion 2030 of the second rotation portion 1350 may be inserted into the third groove portion 1733 of the support plate 540.

According to an embodiment of the disclosure, the second rotation portion 1350 may include the third extension portion 2030 that may be inserted into the third groove portion 1733 of the support plate 540, such that the area of the second rotation portion 1350 of the first spiral arm 630 that contacts the third rotation support portion 1430 of the second cam structure 660 and the eleventh rail portion 1750 of the support plate 540 may increase in the first state or the second state of the foldable electronic device 100. As the area of the second rotation portion 1350 of the first spiral arm 630 that contacts the third rotation support portion 1430 of the second cam structure 660 and the eleventh rail portion 1750 of the support plate 540 increases, the foldable electronic device 100 may maintain its stable state.

According to an embodiment of the disclosure, referring to the cross-section N-N' of FIG. 49, in the first state or the second state of the foldable electronic device 100, at least a part of the first rotation protrusion 1380 of the first spiral arm 630 may be inserted into the first groove portion 1731 of the support plate 540. For example, the first extension portion 2010 of the first rotation protrusion 1380 may be inserted into the first groove portion 1731 of the support plate 540.

According to an embodiment of the disclosure, the first rotation protrusion 1380 may include the first extension portion 2010 that is inserted into the first groove portion 1731 of the support plate 540, such that the area of the first rotation protrusion 1380 of the first spiral arm 630 that contacts the first rotation guide portion 1600 of the slider member 670 may increase in the first state or the second state of the foldable electronic device 100. As the area of the first rotation protrusion 1380 of the first spiral arm 630 that contacts the first rotation guide portion 1600 of the slider member 670 increases, the foldable electronic device 100 may maintain its stable state.

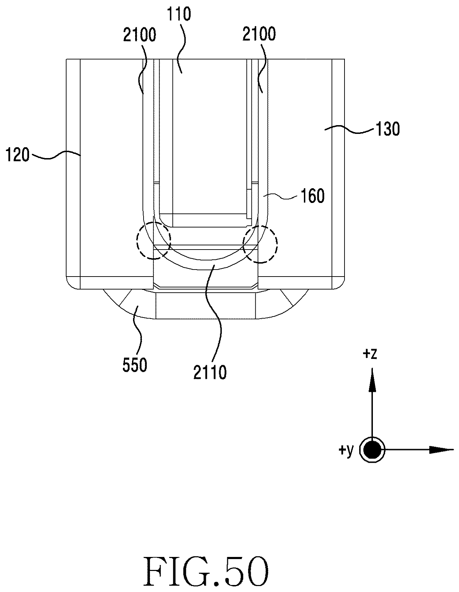

FIG. 50 is a view illustrating the flexible display in the folded state of the foldable electronic device according to an embodiment.

According to an embodiment of the disclosure, FIG. 50 is a view illustrating arrangements of the first housing 110, the second housing 120, the third housing 130, the second hinge structure 150, and the flexible display 160 in the third state of the foldable electronic device 100.

According to an embodiment of the disclosure, in the third state of the foldable electronic device 100, the flexible display 160 may include a flat portion 2100 and a curved portion 2110. For example, the flat portion 2100 of the flexible display 160 may be a portion that contacts the second housing 120 or the third housing 130 in the third state of the foldable electronic device 100. For example, the curved portion 2110 of the flexible display 160 may be a portion that extends from the flat portion 2100 and has a predetermined curvature. For example, the curved portion 2110 may be positioned in a space between the first housing 110 and the hinge housing 550.

According to an embodiment of the disclosure, in the third state of the foldable electronic device 100, at least a part of the first housing 110 may be disposed in a space formed by the second hinge structure 150, the second housing 120, and the third housing 130. According to an embodiment, referring to FIG. 50, with the first housing 110 being disposed in the space formed by the second hinge structure 150, the second housing 120, and the third housing 130, at least a part of the first housing 110 may contact a part of the curved portion 2110 of the flexible display 160. For example, referring to FIG. 50, the curved portion 2110 of the flexible display 160 may have a predetermined curvature, so that the space formed by the second hinge structure 150, the second housing 120, and the third housing 130 may be reduced.

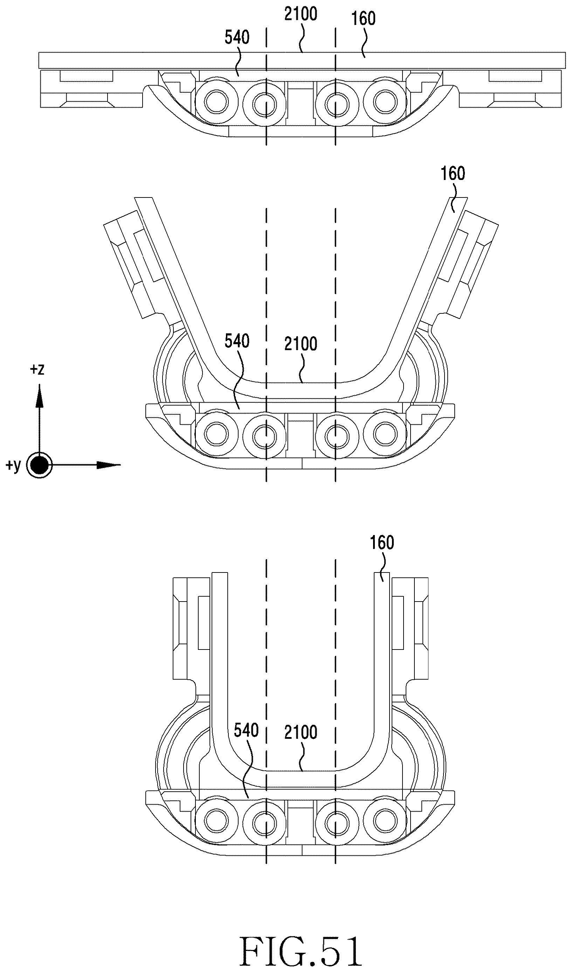

FIG. 51 is a view illustrating the support plate for supporting the flexible display according to an embodiment.

According to an embodiment of the disclosure, in the first state, the second state, and the third state of the foldable electronic device 100, the support plate 540 may support at least a part of the flexible display 160. The support plate 540 may support at least a part of the flexible display 160 even while the state of the foldable electronic device 100 is changing, so that the durability of the flexible display 160 may be improved.

According to an embodiment of the disclosure, referring to FIG. 51, in the third state of the foldable electronic device 100, the support plate 540 may support at least a part of the flexible display 160, such that the curvature of a portion between the flat portion 2100 and the curved portion 2110 of the flexible display 160 may increase. As the curvature of the portion between the flat portion 2100 and the curved portion 2110 increases, the space between the curved portion 2010 of the flexible display 160 and the first housing 110 may increase. As the space between the curved portion 2010 of the flexible display 160 and the first housing 110 increases, at least a part of the first housing 110 may not contact the curved portion 2110 of the flexible display 160, for example. As the space formed by the second housing 120 and the third housing 130 increases, for example, the portion between the flat portion 2100 and the curved portion 2110 of the flexible display 160 may decrease.

An embodiment of the disclosure relates to an apparatus for providing a wide hinge structure enabling a first housing to be disposed between a second housing and a third housing in a folded state of a multi-foldable electronic device.

An embodiment of the disclosure relates to a foldable electronic device which fastens a rotation arm and a spiral arm to each other and allows the rotation arm and the spiral arm to rotate about one axis, so that components necessary for implementing a plurality of axes may be reduced.

The technical object to be achieved by the disclosure is not limited to those mentioned above, and other technical objects that are not mentioned above may be clearly understood to those skilled in the art.

According to an embodiment of the disclosure, a foldable electronic device includes: a first housing; a second housing; a hinge assembly configured to rotatably connect the first housing and the second housing; and a flexible display disposed at least in the first housing and the second housing. The hinge assembly may include: a first spiral arm which is fastened to the first housing and includes a first rotation protrusion of a spiral shape; a second spiral arm which is fastened to the second housing and includes a second rotation protrusion of a spiral shape; and a slider member which includes a first rotation guide portion corresponding to the first rotation protrusion and a second rotation guide portion corresponding to the second rotation protrusion. While the foldable electronic device is being folded, the first spiral arm is configured to rotate about a first rotation axis and the second spiral arm is configured to rotate about a second rotation axis, and the slider member may move in a first direction which is parallel to the first rotation axis or the second rotation axis. In this way, a spiral interlocking structure is formed in which the interlock of the left and right housings during the folding and unfolding operation of the electronic device can be controlled, e.g., by only the rotational movement of the spiral arms without separate interlocking parts.

According to an embodiment of the disclosure, the foldable electronic device may further include a base member which supports at least a part of the hinge assembly. The base member may include a first rail portion. The slider member may move along the first rail portion of the base member.

According to an embodiment of the disclosure, the slider member may include a first receiving portion formed to correspond to the first rail portion of the base member. The slider member may move along the first rail portion received in the first receiving portion.

According to an embodiment of the disclosure, the cross section of the first rail portion of the base member may be formed in at least one shape of a square, trapezoidal, triangular, or circular shape.

According to an embodiment of the disclosure, the hinge assembly may further include: a first cam structure which includes a first rotation support portion to support at least a part of a first rotation portion formed on one side of the first spiral arm; and a second cam structure which includes a second rotation support portion to support at least a part of a second rotation portion formed on the other side of the first spiral arm. The slider member may move along the first rail portion between the first cam structure and the second cam structure.

According to an embodiment of the disclosure, the first rotation portion of the first spiral arm may include a first cam portion. The second rotation portion of the first spiral arm may include a second cam portion. The first rotation support portion of the first cam structure may include a first convex portion. The second rotation support portion of the second cam structure may include a second convex portion. While the foldable electronic device is being folded, the first cam portion of the first rotation portion may come into contact with the first convex portion of the first rotation support portion, such that the first cam structure moves in a second direction which is opposite to the first direction, and the second cam portion of the second rotation portion may come into contact with the second convex portion of the second rotation support portion, such that the second cam structure may move in the first direction.

According to an embodiment of the disclosure, the base member may include a second rail portion which guides movement of the first cam structure, and a third rail portion which guides movements of the second cam structure. The second rail portion and the third rail portion may extend from the first rail portion. The first cam structure may include a second receiving portion formed to correspond to the second rail portion of the base member, and the second cam structure may include a third receiving portion formed to correspond to the third rail portion of the base member.

According to an embodiment of the disclosure, the hinge assembly may further include: at least one first elastic member disposed between the first cam structure and one side of the base member; and at least one second elastic member disposed between the second cam structure and the other side of the base member. As the first cam structure moves in the second direction, a magnitude of an elastic force exerted on the first cam structure by the at least one first elastic member may increase. As the second cam structure moves in the first direction, a magnitude of an elastic force exerted on the second cam structure by the at least one second elastic member may increase.

According to an embodiment of the disclosure, the first rotation support portion of the first cam structure may include a first concave portion. The second rotation support portion of the second cam structure may include a second concave portion. In an unfolded state of the foldable electronic device, the first cam portion of the first spiral arm may be positioned in the first concave portion, and the second cam portion of the first spiral arm may be positioned in the second concave portion, such that the at least one first elastic member and the at least one second elastic member have a first length.

According to an embodiment of the disclosure, the first rotation support portion of the first cam structure may include a third concave portion. The second rotation support portion of the second cam structure may include a fourth concave portion. In a folded state of the foldable electronic device, the first cam portion of the first spiral arm may be positioned in the third concave portion, and the second cam portion of the first spiral arm may be positioned in the fourth concave portion, such that the at least one first elastic member and the at least one second elastic member have a second length shorter than the first length.

According to an embodiment of the disclosure, while the foldable electronic device is being folded, the first cam portion of the first spiral arm may be positioned in the first convex portion, and the second cam portion of the first spiral arm may be positioned in the second convex portion, such that the at least one first elastic member and the at least one second elastic member have a third length shorter than the second length.

According to an embodiment of the disclosure, the foldable electronic device may further include a support plate which supports at least a part of the flexible display, and is disposed between the hinge assembly and the flexible display. The support plate may include at least one groove portion into which at least a part of the first spiral arm is inserted in an unfolded state of the foldable electronic device.

According to an embodiment of the disclosure, at least one of one end of the first rotation portion of the first spiral arm, one end of the second rotation portion of the first spiral arm, or one end of the first rotation guide portion is inserted into the at least one groove portion of the support plate.

According to an embodiment, the hinge assembly may further include: a first rotation arm which is fastened to the first housing and is connected with the first spiral arm; and a second rotation arm which is fastened to the second housing and is connected with the second spiral arm. While the foldable electronic device is being folded, the first rotation arm may rotate about the first rotation axis, and the second rotation arm may rotate about the second rotation axis.

According to an embodiment of the disclosure, the foldable electronic device may further include a hinge housing configured to accommodate at least a part of the hinge assembly and including a first stopper and a second stopper. The first rotation arm may include a first locking portion. The second rotation arm may include a second locking portion. In the folded state of the foldable electronic device, the first locking portion of the first rotation arm may contact the first stopper of the hinge housing, and the second locking portion of the second rotation arm may contact the second stopper of the hinge housing.

According to an embodiment, the first stopper of the hinge housing may include a third elastic member to provide a repulsive force to the first locking portion of the first rotation arm. The second stopper of the hinge housing may include a fourth elastic member to provide a repulsive force to the second locking portion of the second rotation arm.

According to an embodiment, the first stopper of the hinge housing may include a first magnetic substance. The first locking portion of the first rotation arm may include a second magnetic substance to generate a repulsive force with the first magnetic substance.

According to an embodiment of the disclosure. a multi-foldable electronic device may include: a first housing; a second housing; a third housing; a first hinge structure configured to rotatably connect the first housing and the second housing; a second hinge structure configured to rotatably connect the second housing and the third housing; and a flexible display which crosses the first hinge structure and the second hinge structure and is disposed in the first housing, the second housing, and the third housing. The first hinge structure may include a plurality of gears disposed on a plurality of axes. The first housing and the second housing may be rotated by the plurality of gears in the first hinge structure. The second hinge structure may include: a first spiral arm fastened to the second housing and including a first rotation guide portion of a spiral shape; a second spiral arm fastened to the third housing and including a second rotation guide portion of a spiral shape; and a slider member including a first rotation guide groove portion corresponding to the first rotation guide portion, and a second rotation guide groove portion corresponding to the second rotation guide portion. While at least one of the second housing or the third housing is rotating, the first spiral arm may rotate about a first rotation axis and the second spiral arm may rotate about a second rotation axis, and the slider member may move in a direction parallel with the first rotation axis and the second rotation axis.

According to an embodiment, the first rotation protrusion may deplace along the first rotation guide portion, and the second rotation protrusion may deplace along the second rotation guide portion, such that the slider member moves in the direction parallel with the first rotation axis and the second rotation axis.

According to an embodiment, when the second housing and the third housing overlap each other by the second hinge structure, the first housing may be disposed between the second housing and the third housing.

According to an embodiment of the disclosure, there is provided a foldable electronic device including a wide hinge structure enabling housings to have a wide radius of rotation.

According to an embodiment of the disclosure, there is provided a foldable electronic device in which a plurality of arms for rotating housings are fastened and are rotatable about a single axis.

In addition, various effects that are directly or indirectly understood through the disclosure may be provided.

In the above-described specific embodiments of the disclosure, elements included in the disclosure are expressed in singular or plural forms according to specific embodiments. However, singular or plural forms are appropriately selected according to suggested situations for convenience of explanation, and the disclosure is not limited to a single element or plural elements. An element which is expressed in a plural form may be configured in a singular form or an element which is expressed in a singular form may be configured in plural number.

The term "unit" or "module" used in the disclosure refer to a hardware component such as a processor or a circuit, and/or a software component executed by a hardware component such as a processor.

Specific execution explained in the disclosure is merely an example, and the scope of the disclosure is not limited by any method. For the sake of clarity of the specification, descriptions of related-art electronic components, control systems, software, and other functional aspects of the systems are omitted.

In the disclosure, such phrase as "including at least one of a, b, or c" may refer to "including only a", "including only b", "including only c", "including a and b", "including b and c, "including a and c", "including all of a, b, c".

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

## Claims

1. A foldable electronic device comprising:
a first housing;
a second housing;
a hinge assembly configured to rotatably couple the first housing and the second housing; and
a flexible display at least partially disposed in the first housing and the second housing,
wherein the hinge assembly comprises:
a first spiral arm which is coupled to the first housing and comprises a first rotation protrusion formed in a spiral shape;
a second spiral arm which is coupled to the second housing and comprises a second rotation protrusion formed in a spiral shape; and
a slider member which comprises a first rotation guide portion to at least partially accommodate the first rotation protrusion and a second rotation guide portion to at least partially accommodate the second rotation protrusion,
wherein, while the foldable electronic device is being folded, the first spiral arm is configured to rotate about a first rotation axis and the second spiral arm is configured to rotate about a second rotation axis, and the slider member is configured to move in a first direction which is parallel to at least one of the first rotation axis or the second rotation axis.

2. The foldable electronic device of claim 1, wherein the hinge assembly further comprises a base member which is connected with the slider member,
wherein the base member comprises a first rail portion, and
wherein the slider member is configured to move along the first rail portion of the base member.

3. The foldable electronic device of claim 2, wherein the slider member comprises a first receiving portion formed to correspond to the first rail portion of the base member, and
wherein the slider member is configured to move along the first rail portion received in the first receiving portion.

4. The foldable electronic device of claim 2, wherein the hinge assembly further comprises: a first cam structure which comprises a first rotation support portion to support at least a part of a first rotation portion formed on one side of the first spiral arm; and a second cam structure which comprises a second rotation support portion to support at least a part of a second rotation portion formed on the other side of the first spiral arm, and
wherein the slider member is configured to move along the first rail portion between the first cam structure and the second cam structure.

5. The foldable electronic device of claim 4, wherein the first rotation portion of the first spiral arm comprises a first cam portion, and the second rotation portion of the first spiral arm comprises a second cam portion,
wherein the first rotation support portion of the first cam structure comprises a first convex portion, and the second rotation support portion of the second cam structure comprises a second convex portion, and
wherein, while the foldable electronic device is being folded, the first cam portion of the first rotation portion is configured to come into contact with the first convex portion of the first rotation support portion, such that the first cam structure is configured to move in a second direction which is opposite to the first direction, and the second cam portion of the second rotation portion is configured to come into contact with the second convex portion of the second rotation support portion, such that the second cam structure is configured to move in the first direction.

6. The foldable electronic device of claim 5, wherein the base member comprises a second rail portion which is configured to guide movement of the first cam structure, and a third rail portion which is configured to guide movements of the second cam structure,
wherein the second rail portion and the third rail portion extend from the first rail portion,
wherein the first cam structure comprises a second receiving portion formed to correspond to the second rail portion of the base member, and
wherein the second cam structure comprises a third receiving portion formed to correspond to the third rail portion of the base member.

7. The foldable electronic device of claim 5, wherein the hinge assembly further comprises: at least one first elastic member disposed between the first cam structure and one side of the base member; and at least one second elastic member disposed between the second cam structure and the other side of the base member,
wherein, as the first cam structure moves in the second direction, a magnitude of an elastic force exerted on the first cam structure by the at least one first elastic member increases, and
wherein, as the second cam structure moves in the first direction, a magnitude of an elastic force exerted on the second cam structure by the at least one second elastic member increases.

8. The foldable electronic device of claim 7, wherein the first rotation support portion of the first cam structure comprises a first concave portion, and the second rotation support portion of the second cam structure comprises a second concave portion, and
wherein, in an unfolded state of the foldable electronic device, the first cam portion of the first spiral arm is positioned in the first concave portion, and the second cam portion of the first spiral arm is positioned in the second concave portion, such that the at least one first elastic member and the at least one second elastic member have a first length.

9. The foldable electronic device of claim 8, wherein the first rotation support portion of the first cam structure comprises a third concave portion, and the second rotation support portion of the second cam structure comprises a fourth concave portion, and
wherein, in a folded state of the foldable electronic device, the first cam portion of the first spiral arm is positioned in the third concave portion, and the second cam portion of the first spiral arm is positioned in the fourth concave portion, such that the at least one first elastic member and the at least one second elastic member have a second length shorter than the first length.

10. The foldable electronic device of claim 9, wherein, while the foldable electronic device is being folded, the first cam portion of the first spiral arm is configured to come into contact with the first convex portion, and the second cam portion of the first spiral arm is configured to come into contact with the second convex portion, such that the at least one first elastic member and the at least one second elastic member have a third length shorter than the second length.

11. The foldable electronic device of claim 4, further comprising a support plate which supports at least a part of the flexible display, and is disposed between the hinge assembly and the flexible display,
wherein the support plate comprises at least one groove portion into which at least a part of the first spiral arm is inserted in an unfolded state of the foldable electronic device, and wherein at least one of one end of the first rotation portion of the first spiral arm, one end of the second rotation portion of the first spiral arm, or one end of the first rotation protrusion is inserted into the at least one groove portion of the support plate.

12. The foldable electronic device of claim 1, wherein the hinge assembly further comprises:
a first rotation arm which is fastened to the first housing and is connected with the first spiral arm; and
a second rotation arm which is fastened to the second housing and is connected with the second spiral arm,
wherein, while the foldable electronic device is being folded, the first rotation arm is configured to rotate about the first rotation axis, and the second rotation arm is configured to rotate about the second rotation axis.

13. The foldable electronic device of claim 12, further comprising a hinge housing configured to accommodate at least a part of the hinge assembly and comprising a first stopper and a second stopper,
wherein the first rotation arm comprises a first locking portion,
wherein the second rotation arm comprises a second locking portion,
wherein, in the folded state of the foldable electronic device, the first locking portion of the first rotation arm contacts the first stopper of the hinge housing, and the second locking portion of the second rotation arm contacts the second stopper of the hinge housing.

14. The foldable electronic device of claim 13, wherein the first stopper of the hinge housing comprises a third elastic member to provide a repulsive force to the first locking portion of the first rotation arm, and
wherein the second stopper of the hinge housing comprises a fourth elastic member to provide a repulsive force to the second locking portion of the second rotation arm, wherein the first stopper of the hinge housing comprises a first magnetic substance, and
wherein the first locking portion of the first rotation arm comprises a second magnetic substance to apply a repulsive force to the first magnetic substance.

15. The foldable electronic device of claim 1, further comprising a third housing,
wherein, in the folded state of the foldable electronic device, the first housing and the second housing face each other, and the third housing is disposed in a space between the first housing and the second housing,
wherein, in the folded state of the foldable electronic device, a width of the space between the first housing and the second housing corresponds to a distance between the first rotation axis and the second rotation axis, wherein the foldable electronic device comprises a second hinge structure, and
wherein the third housing is configured to rotate about a single axis relative to the second hinge structure.
